# EUROPÄISCHE PATENTSCHRIFT

(11) **EP 3 396 796 B1**
(45) Veröffentlichungstag und Bekanntmachung des Hinweises auf die Patenterteilung: **21.07.2021**
(21) Anmeldenummer: 17168040.8
(22) Anmeldetag: 25.04.2017
(51) Int. Cl.: H02G 1/00, H01R 43/042, H01R 43/048, G01L 5/00, B25B 27/14

(54) **PRESS-, CRIMP- ODER SCHNEIDWERKZEUG SOWIE WERKZEUGGRUPPE**
PRESS, CRIMPING OR CUTTING TOOL AND TOOL GROUP
OUTIL DE COMPRESSION, DE SERTISSAGE OU DE DÉCOUPE ET MODULE D'OUTILS

(43) Veröffentlichungstag der Anmeldung: 31.10.2018
(73) Patentinhaber: WEZAG GmbH & Co. KG, 35260 Stadtallendorf (DE)
(72) Erfinder: Glockseisen, Thomas, 40217 Düsseldorf (DE)
(74) Vertreter: REHBERG HÜPPE + PARTNER

(56) Entgegenhaltungen:
- EP-A1- 2 698 885
- EP-A1- 3 067 679
- EP-A2- 1 071 173
- WO-A1-90/00098
- DE-A1- 4 014 221
- DE-A1- 19 932 961
- DE-U1- 29 806 179
- Anonymous: "Making Accurate Strain Measurements - Improving SNR and Determining Optimal Excitation Levels - National Instruments", , 19 March 2012 (2012-03-19), XP055587015, Retrieved from the Internet: URL:http://www.ni.com/tutorial/5904/en/ [retrieved on 2019-05-08]
- Anonymous: "Signal-to-noise ratio - Wikipedia", , 7 April 2017 (2017-04-07), XP055587016, Retrieved from the Internet: URL:https://en.wikipedia.org/w/index.php?t itle=Signal-to-noise_ratio&oldid=774366238 [retrieved on 2019-05-08]

## Beschreibung

### TECHNISCHES GEBIET DER ERFINDUNG

Die Erfindung betrifft ein Presswerkzeug, ein Crimpwerkzeug oder ein Schneidwerkzeug (im Folgenden teilweise gemeinsam auch nur als "Werkzeug" bezeichnet). Des Weiteren betrifft die Erfindung eine Werkzeuggruppe mit Press-, Crimp- oder Schneidwerkzeugen unterschiedlicher Typen.

Bei einem Presswerkzeug kann es sich bspw. um eine manuell betätigte Presszange zum Verpressen von Fassungen, Rohren oder Fittingen handeln, wie diese bspw. in einer der Druckschriften DE 197 09 639 A1, DE 198 34 859 C2, DE 199 24 086 C2, DE 199 24 087 C2, DE 199 63 097 C1, DE 103 46 241 B3, DE 10 2007 001 235 B4, DE 10 2008 005 472 B3, EP 2 995 424 A1 und EP 2 826 598 A1 oder der nicht vorveröffentlichten europäischen Patentanmeldung EP 16 156 231.9 beschrieben ist.

Ein Crimpwerkzeug kann bspw. eine manuell betätigte Crimpzange sein, die zum Verpressen eines Steckers mit einem elektrischen Leiter dient und/oder gemäß der nicht vorveröffentlichten europäischen Patentanmeldung EP 16 156 231.9 oder einer der Druckschriften EP 3 012 924 A1, EP 3 012 923 A1, EP 2 698 885 A1, EP 2 672 580 A1, EP 2 463 969 A2, DE 37 087 272 C2, DE 40 23 337 C1, DE 40 26 332 C2, DE 40 39 435 C1, DE 42 41 224 C1, DE 44 27 553 C2, DE 197 13 580 C2, DE 197 53 436 C2, DE 198 02 287 C1, DE 198 07 737 C2, DE 298 03 336 U1, DE 198 32 884 C1, DE 100 56 900 C1, DE 101 32 413 C2, DE 101 40 270 B4, DE 102 42 345 B3, DE 10 2005 003 615 B3, DE 10 2005 003 617 B3, DE 10 2007 038 626 B3, DE 10 2008 003 524 B4, DE 10 2008 012 011 B3, DE 20 2008 003 703 U1, EP 1 724 101 A1, EP 2 305 428 A1, DE 10 2010 061 148 A1, DE 10 2001 052 967 B4 oder entsprechend den vor dem Anmeldetag der vorliegenden Patentanmeldung seitens der Anmelderin vertriebenen Crimphandwerkzeugen mit den Kennzeichnungen CS10, CSV10, CSV10-LWL, CSV10-FFC, AE, CS8, CK100, CS30, CS KTVR, CE/CG, CS150, CS200, CS210, CP600 ausgebildet sein kann.

Ein Schneidwerkzeug kann bspw. eine manuell betätigte Kabelschneidzange sein und/oder gemäß einer der nicht vorveröffentlichten europäischen Patentanmeldungen EP 15 191 264.9 und EP 15 191 261.5 oder entsprechend der Druckschrift DE 43 03 180 C1 oder entsprechend eines Schneidwerkzeugs, welches zum Anmeldetag der vorliegenden Patentanmeldung von der Anmelderin unter der Kennzeichnung Kabelschneider SH vertrieben wird, ausgebildet sein.

Hierbei ist die Erfindung sowohl für manuell betätigte Werkzeuge als auch für Werkzeuge, bei welchen die Betätigung mit Unterstützung einer nicht manuellen Energiequelle oder ausschließlich über eine nicht manuelle Energiequelle erfolgt (insbesondere über einen pneumatischen Antrieb, einen hydraulischen Antrieb oder einen elektrischen Antrieb, wobei der elektrische Antrieb über eine kabelgebundene externe elektrische Energiequelle oder auch einen einen Bestandteil des Werkzeugs bildenden Akkumulator mit Leistung versorgt sein kann), einsetzbar.

### STAND DER TECHNIK

Die Druckschrift DE 10 2007 050 176 A1 beschreibt, dass bei dem Crimpen eines Steckers mit einem elektrischen Leiter mittels einer Crimpzange die zunehmende Komplexität von Kabelbäumen, eine verschärfte Produkthaftung und erhöhte Garantieanforderungen eine Qualitätssicherung durch Überwachung der Crimpkraft erfordern. Vorgeschlagen wird eine Kraftmesseinrichtung, welche als piezoelektrischer Kraftsensor oder als Dehnmessstreifen ausgebildet sein kann. Die Kraftmesseinrichtung ist auf einer Außenseite eines Crimpstempels oder auch innerhalb des Crimpstempels oder in einer Crimpaufnahme angeordnet. Des Weiteren verfügt die Crimpzange über einen Sender, der oberhalb des Crimpstempels am Crimpzangenkopf angebracht ist. Der Sender sendet ein drahtloses Crimpkraftsignal aus, welches von einer Empfangs- und Auswertereinrichtung empfangen und ausgewertet wird. Der Sender kann über Bedienelemente ein- und ausgeschaltet werden. Des Weiteren kann über diese Bedienelemente unter Umständen die Frequenz des Senders eingestellt werden. In den Sender ist eine Energiequelle in Form einer elektrischen Batterie oder eines aufladbaren Akkumulators zur Energieversorgung des Senders und der Kraftmesseinrichtung vorgesehen. Auch vorgeschlagen wird, dass der Sender über eine Induktionsspule verfügen kann, in welcher ein äußeres Magnetfeld einen Induktionsstrom erzeugen kann, um den Akkumulator aufzuladen. Ebenfalls vorgeschlagen wird, dass an der Crimpzange eine Solarzelle montiert ist zur Aufladung des Akkumulators. Schließlich wird auch vorgeschlagen, dass eine temporäre Kabelverbindung vorhanden ist. Der Sender besitzt eine Anzeigevorrichtung, an welcher die Crimpkraft, die Sendefrequenz, das Bestehen einer drahtlosen Verbindung, der Ladezustand der Energiequelle u. ä. angezeigt werden kann. Die Anzeigevorrichtung kann als LED- oder LCD-Anzeigevorrichtung ausgebildet sein. Zusätzlich kann an der Crimpzange ein Wegmesssystem zur Erfassung des Arbeitshubs der Crimpzange vorgesehen sein. Um Beschädigungen zu vermeiden, kann die Crimpzange über eine Ratschen- oder Durchrutsch-Einrichtung verfügen, welche die applizierbare Crimpkraft auf einen vorgegebenen Wert begrenzt. Des Weiteren wird vorgeschlagen, dass die Empfangs-Auswertevorrichtung als handelsüblicher PC mit einem Bluetooth-Empfänger ausgebildet ist.

Die Druckschrift DE 298 06 179 U1 beschreibt als aus DE 40 14 221 A1 bekannt, in einer Crimppresse die Qualität der erstellten Crimpverbindung durch Erfassung der Crimpkraft zu überwachen. Hierzu ist der Crimpstempel, die Crimpform oder der Unterbau als Federkörper ausgebildet, an dem ein Dehnungsmessstreifen angebracht ist. Der Weg des Crimpstempels wird über einen induktiven Wegaufnehmer erfasst. Die Druckschrift schlägt vor diesem Hintergrund die Erfassung einer Crimpkraft und des Crimpweges auch an einer Crimpzange vor. Hierzu wird ein erster Kraftsensor eingesetzt, welcher unmittelbar die Crimpkraft im Zangenmaul erfasst. Ein zweiter Kraftsensor erfasst den Öffnungsweg der Maulöffnung, sodass über diesen mittelbar die Erfassung eines Crimpweges erfolgt. Als Kraftsensoren werden hier Dehnungsmessstreifen oder piezoelektrische Kraftsensoren eingesetzt. Hierbei kann ein Dehnungsmessstreifen auf einer Blattfeder angebracht werden, welche bei der Schließbewegung der Crimpzange gespannt wird. Vorgeschlagen wird auch, dass der erste Kraftsensor an einem Zwischenteil in einem Hebelantrieb der Crimpzange angebracht ist. Zur Temperaturkompensation kann ein Referenzsensor eingesetzt werden. An der Crimpzange kann eine Auswerteschaltung vorgesehen sein mit einer geeigneten Anzeige, um den Benutzer der Crimpzange während des Crimpens über die Qualität des Crimpverlaufs zu informieren. Auch ein Datenspeicher kann an der Crimpzange vorgesehen sein, in welchem für unterschiedliche Arten von Crimpungen, insbesondere verschiedene Kontakttypen, Kraft-Weg-Verläufe gespeichert werden können, sodass für eine spezielle Crimpung der zugeordnete Kraft-Weg-Verlauf bei der Qualitätsüberwachung zur Verfügung steht. Als optische Anzeigeeinrichtung an der Crimpzange kann eine Leuchtdiodenanzeige oder eine Flüssigkristallanzeige Einsatz finden. Ergänzend kann eine Signalausgabe über eine akustische Anzeigeeinrichtung erfolgen. Findet eine aus Leuchtdioden bestehende optische Anzeigevorrichtung oder eine akustische Anzeigeeinrichtung Einsatz, kann über diese die erfolgreiche Durchführung eines Crimpvorgangs durch unterschiedliche Farben oder Töne bestätigt werden. Als Schnittstelle für einen stationären Rechner kann eine kabelgebundene oder optische Schnittstelle sowie jede mögliche über Luft übertragene Schnittstelle eingesetzt werden, welche elektromagnetische Strahlung im sichtbaren, infraroten oder Radio-Bereich zum Datenaustausch nutzt. Hierbei kann es sich auch um eine bidirektionale Schnittstelle handeln. Möglich ist auch, dass die Schließbewegung des Zangenmauls bei der Crimpzange über einen elektrischen Servomotor unterstützt wird. Die Überwachung des Crimpkraftverlaufs kann darin bestehen, dass der gemessene Crimpkraftverlauf mit einem vorbestimmten Crimpkraftverlauf, ggf. mit einem vorgegebenen Toleranzbereich, verglichen wird.

Das Patent DE 10 2004 009 489 B4 nennt die Druckschriften US 5, 195, 042, DE 298 06 179, DE 199 32 962 und DE 697 00 589 als relevanten Stand der Technik hinsichtlich des Einsatzes von Weg-Kraft-Messsystemen in der Crimptechnik und betrifft eine elektronische Überwachung eines Einstellvorganges einer Crimpzange.

In der Patentanmeldung DE 10 2008 030 773 A1 werden die Druckschriften DE 40 14 221, DE 43 37 796, DE 199 32 962, DE 29 806 179.1 und US-PS 5 490 406 als relevanter Stand der Technik hinsichtlich vorbekannter elektronischer Einrichtungen zur Kraft-Weg-Messung in Crimpzangen genannt. Auch diese Patentanmeldung betrifft die elektronische Überwachung eines Einstellvorganges der Crimpzange. Hierbei kommt ein Sensorsystem zum Einsatz, welches absolut oder inkremental einen Crimpweg erfasst. Über eine Steuer-, Überwachungs- und Auswerteinheit kann eine elektronische Anzeige an einer LCD-Anzeige erzeugt werden. Einsatz finden kann eine Kassette, in welche ein Rechnersystem sowie eine der Aufnahme- und Einstelleinrichtung dienende Baueinheit mit dem Sensorsystem integriert sein kann. Baueinheiten können in eine bereits fertig montierte Zange ein- und ausgebaut werden mit einer Auswechslung jeweils im Bedarfsfall.

Das europäische Patent EP 1 990 874 B1 betrifft eine Crimpzange mit vorzugsweise vier radial zur Längsachse eines Steckers gepressten Stempeln, wobei die Stempel entsprechend einer Verdrehung eines Betätigungsrings erfolgt. Der Betätigungsweg des Betätigungsrings wird über einen Sensor erfasst. Darüber hinaus erfasst ein Identifikationssensor Identifikationsdaten eines Werkzeugs zur Positionierung des Steckers, wobei es sich bei dem Identifikationssensor um ein Hochfrequenz-Etikett handeln kann. Zusätzlich kann ein weiterer Sensor zur Erfassung einer Bewegung eines Stempels und ein Kraftsensor zur Erfassung der Crimpkraft vorgesehen sein. Die Crimpzange kann über eine Schnittstelle verfügen, über die über eine bidirektionale Verbindung Daten übertragen werden, wobei die Übertragung auch drahtlos erfolgen kann.

Das europäische Patent EP 2 043 818 B1 betrifft die Ausstattung einer handbetätigten Zange mit einer Signaleinrichtung, welche das Erreichen einer vorgegeben Schließkraft für die Hand des Benutzer fühlbar macht. Hierbei ist die Signaleinrichtung als in einem Handhebel integrierter Vibrator ausgebildet.

Die Druckschrift EP 2 698 885 A1 offenbart eine Crimpmaschine, in welcher unterschiedliche Wechseladapter Einsatz finden können. Die Wechseladapter verfügen jeweils über einen Stempel sowie einen Amboss. In die Wechseladapter ist des Weiteren jeweils ein Sensor integriert, über welchen eine Erfassung einer Crimpkraft und/oder eine Erfassung eines Crimpwegs erfolgt. Hierbei können in den Wechseladaptern jeweils Sensoren mit unterschiedlichen Messbereichen für unterschiedliche Anwendungen Einsatz finden. Ein Kraftsensor kann in eine Ausnehmung des Ambosses oder des Stempels des Wechseladapters integriert sein. Eine Verformung des Ambosses oder des Stempels soll dann zu einer Beaufschlagung des in der Ausnehmung angeordneten Sensors mit einer Kraft führen. In diesem Fall sollen die elastisch verformbaren Bereiche des Ambosses oder des Stempels der Abstützung über den Sensor mechanisch parallel geschaltet sein. Eine Kalibrierung der Wechseladapter und der Kraftsensoren derselben kann werkseitig oder nach Auslieferung des Wechseladapters erfolgen. Ermittelte Kalibrierfaktoren oder Kalibrierkurven können in einer in den Wechseladapter integrierten Steuereinheit modelliert oder abgelegt werden.

Weiterer Stand der Technik aus den Druckschriften EP 1 071 173 A2, EP 3 067 679 A1, DE 40 14 221 A1, WO 90/00098 A1, DE 199 32 961 A1 bekannt.

### AUFGABE DER ERFINDUNG

Der Erfindung liegt die Aufgabe zugrunde, ein Press-, Crimp- oder Schneidwerkzeug sowie eine Werkzeuggruppe mit Press-, Crimp- oder Schneidwerkzeugen vorzuschlagen, welches oder welche einen integrierten Sensor aufweist/aufweisen und insbesondere hinsichtlich
- des eingesetzten Messprinzips,
- der Herstellungskosten,
- der Kraftaufnahme des Sensors,
- eines Schutzes des Sensors vor einer Überlastung,
- des Einsatzes für eine Werkzeuggruppe oder für Press-, Crimp- oder Schneidwerkzeuge, unterschiedlicher Typen oder für unterschiedliche Anwendungen,
- der Kalibrierung des Sensors,
- der Messgenauigkeiten und/oder
- des Einflusses von Fehlerquellen
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der vorliegenden Erfindung liegt zunächst die Erkenntnis zugrunde, dass der Fachmann bei der Ausstattung eines Press-, Crimp- oder Schneidwerkzeugs mit einem Kraftsensor zur Erfassung der Arbeitskraft möglichst so in den Kraftfluss des Press-, Crimp- oder Schneidwerkzeugs zu integrieren ist, dass die Steifigkeit der im Kraftfluss angeordneten Bauelemente möglichst hoch ist. Auch aus diesem Grund finden in Press-, Crimp- und Schneidwerkzeugen Dehnungsmessstreifen oder piezoelektrische Kraftaufnehmer Einsatz, welche sich durch eine hohe Steifigkeit auszeichnen und deren Auslenkungen in der Regel lediglich im Promillebereich der Erstreckung des Kraftsensors in Messrichtung liegen.

Andererseits liegt der Erfindung die Erkenntnis zugrunde, dass die derzeit eingesetzten Kraftsensoren und deren Integration in die Press-, Crimp- und Schneidwerkzeuge Nachteile aufweisen. Ein Nachteil ist, dass Fehlerquellen wie insbesondere Vibrationen, Temperaturänderungen und hiermit einhergehende Veränderungen der Abmessungen der Bauelemente des Press-, Crimp- und Schneidwerkzeugs, Fertigungstoleranzen wie beispielsweise ein Spiel in Lagern der Antriebskinematik, Materialspannungen, elektrische Einstreuungen und Interferenzen bereits Auswirkungen haben können, welche in der Größenordnung der Auslenkungen liegen können, auf Grundlage welcher das Messsignal des Kraftsensors ermittelt wird. Somit erzeugen die gemäß dem Stand der Technik eingesetzten Kraftsensoren u. U. ein zu ungenaues, von den vorgenannten Fehlerquellen abhängiges Messsignal. Eine Reduzierung des Einflusses derartiger Fehlerquellen erfordert u. U. regelmäßige Nachkalibrierungen.

Den vorgenannten Erkenntnissen trägt die Erfindung dadurch Rechnung, dass in dem Press-, Crimp- oder Schneidwerkzeug im Kraftfluss zwei Bauelemente angeordnet sind. Zwischen den Bauelementen sind ein elastisches Abstützelement und ein Sensor in mechanischer Parallelschaltung angeordnet. Infolge der mechanischen Parallelschaltung erfahren der Sensor und das elastische Abstützelement infolge einer wirkenden Arbeitskraft des Press-, Crimp- oder Schneidwerkzeugs über den Arbeitshub miteinander korrelierende Auslenkungen. Werden beispielsweise die Bauelemente über den Arbeitshub geradlinig relativ zueinander bewegt, sind die Auslenkungen des elastischen Abstützelements und des Sensors gleich. Werden hingegen die beiden Bauelemente über den Arbeitshub relativ zueinander verschwenkt, entspricht das Verhältnis der Auslenkungen des elastischen Abstützelements und des Sensors dem Verhältnis der Abstände des Abstützelements und des Sensors von der Schwenkachse der Bauelemente.

Durch die konstruktive Vorgabe der Steifigkeit des elastischen Abstützelements kann die Größe der Auslenkung des Sensors während des Arbeitshubs des Press-, Crimp- oder Schneidwerkzeugs konstruktiv vorgegeben werden. Hier überwindet die Erfindung das oben angeführt Vorurteil der Fachwelt, die Auslenkung des Sensors möglichst klein zu gestalten. Vielmehr wird erfindungsgemäß vorgeschlagen, dass die Steifigkeit des elastischen Abstützelements so dimensioniert ist, dass bei der maximalen wirkenden Arbeitskraft des Press-, Crimp- oder Schneidwerkzeugs der Sensor eine maximale Auslenkung erfährt, welche (für den Fall, dass die beiden relativ zueinander bewegten Bauelemente des Sensors eine translatorische Relativbewegung ausführen, die das Messsignal erzeugt,) mindestens 0,05 mm beträgt (insbesondere sogar mindestens 0,1 mm, 0,2 mm, 0,3 mm, 0,4 mm oder 0,5 mm, wobei die maximale Auslenkung beispielsweise im Bereich von 0,1 mm bis 20,0 mm oder 0,1 mm bis 15,0 mm oder 0,2 mm bis 1,0 mm liegen kann). Handelt es sich hingegen um einen Sensor, bei dem die relativ zueinander bewegten Bauelemente des Sensors relativ zueinander verschwenkt werden und bei dem die relative Verschwenkung das Messsignal erzeugt, so beträgt die maximale Auslenkung mindestens 1° (insbesondere sogar mindestens 1,5° oder 2,0° oder 2,5° oder 3° oder 4,0° oder 5,0°, wobei die maximale Auslenkung dann beispielsweise in einem Bereich von 1° bis 10° oder 1,5° bis 6° liegen kann). Damit ist insbesondere die maximale Auslenkung des Sensors um mindestens eine Größenordnung größer als die Auslenkung, welche bei Kraftsensoren gemäß dem Stand der Technik, insbesondere einem Dehnungsmessstreifen oder einem piezoelektrischen Kraftaufnehmer, auftreten. Hierbei ergibt sich die maximale wirkende Arbeitskraft aus den mit dem Press-, Crimp- oder Schneidwerkzeug zu bearbeitenden Werkstücken. Möglichst ist auch, dass die maximale Arbeitskraft aus der maximalen von dem Antrieb des Press-, Crimp- oder Schneidwerkzeugs erzeugbaren Antriebskraft (für den Fall eines Antriebs über Handhebel der maximalen Handkraft) und dem Übersetzungsverhältnis der in dem Press-, Crimp- oder Schneidwerkzeug genutzten Antriebskinematik berechnet wird. So ist für das Beispiel einer Press-, Crimp- oder - Schneidzange in DIN festgelegt, dass als maximale Handkraft bei einer Einhandbedienung einer Press-, Crimp- oder - Schneidzange von einer Handkraft von 250 N auszugehen ist, so dass mit einer Handkraft von 250 N die maximale Arbeitskraft ermittelt wird, die sich aus der an Handhebeln wirkenden maximalen Handkraft von 250 N und der übersetzenden oder untersetzenden Kinematik einer Press-, Crimp- oder Schneidzange ergibt, und damit eine Dimensionierung des elastischen Abstützelements so erfolgt, dass sich für die genannte maximale Handkraft die o. a. Auslenkung des Sensors ergibt.

Durch die erfindungsgemäße Nutzung einer verhältnismäßig großen maximalen Auslenkung des Sensors kann der Einfluss der vorgenannten Fehlerquellen auf das Messsignal des Sensors (u. U. signifikant) reduziert werden, womit eine verbesserte Messung der Arbeitskraft des Press-, Crimp- oder Schneidwerkzeugs erstmalig ermöglicht ist.

Erfindungsgemäß handelt es sich bei einem Bauelement um eine Werkzeugbacke, während das andere Bauelement ein Abstützkörper ist. Für diese Ausgestaltung erfolgt die Anordnung des Abstützelements und des Sensors unmittelbar benachbart eines Press- oder Crimpgesenks oder eines Schneidelements, womit u. U. die Messgenauigkeit noch weiter erhöht werden kann. Andererseits ist u. U. die Integration des Abstützelements und des Sensors im Umgebungsbereich der Werkzeugbacke besonders einfach und platzsparend möglich.

Möglich ist, dass im Rahmen der Erfindung eine Werkzeugbacke des Press-, Crimp- oder Schneidwerkzeugs translatorisch, über eine Verschwenkung oder beliebig kurvenförmig relativ zu einer anderen Werkzeugbacke geführt ist. Die Werkzeugbacke kann unmittelbar eine Schneide des Schneidwerkzeugs oder ein Press- oder Crimpgesenk des Presswerkzeugs oder Crimpwerkzeugs ausbilden. Möglich ist aber auch, dass an der Werkzeugbacke eine Schneide oder ein Press- oder Crimpgesenk befestigt ist oder auswechselbar gehalten ist, wobei vorzugsweise eine Kopplung der Werkzeugbacke mit einem Press- oder Crimpgesenk über einen das Press- oder Crimpgesenk durchsetzenden Querträger erfolgt, der in einer randoffenen Ausnehmung der Werkzeugbacke gehalten ist, wie dies Gegenstand des Patents DE 198 02 287 C1 ist.

In weiterer Ausgestaltung der Erfindung ist die Werkzeugbacke über eine Führung an einem Abstützkörper abgestützt. Hierbei gewährleistet die Führung einen verbleibenden Messfreiheitsgrad zwischen der Werkzeugbacke und dem Abstützkörper. Erfindungsgemäß ist die Werkzeugbacke in Richtung des genannten Messfreiheitsgrads über die mechanische Parallelschaltung einerseits des elastischen Abstützelements und andererseits des Sensors an dem Abstützkörper abgestützt.

Die Führung zwischen der Werkzeugbacke und dem Abstützkörper kann einen beliebigen verbleibenden Messfreiheitsgrad gewährleisten, insbesondere einen translatorischen Messfreiheitsgrad oder einen beliebig kurvenförmigen Messfreiheitsgrad. Hierbei kann die Führung auch beliebig konstruktiv ausgebildet sein, bspw. für den Fall eines translatorischen Messfreiheitsgrads in Form einer Gleitführung.

Für einen Vorschlag der Erfindung ist die Führung eine Linearführung. In diesem Fall kann der verbleibende Messfreiheitsgrad ein translatorischer Messfreiheitsgrad der Werkzeugbacke relativ zu dem Abstützkörper sein. Um lediglich ein nicht beschränkendes Beispiel zu nennen, kann somit die erfindungsgemäße Ausgestaltung auch Einsatz finden für ein Werkzeug mit einer Antriebskinematik entsprechend einem Werkzeug CS 10 oder CS 30 der Anmelderin.

Gemäß einem anderen Vorschlag ist die Führung ein Schwenklager, womit der verbleibende Messfreiheitsgrad ein Schwenk-Messfreiheitsgrad der Werkzeugbacke relativ zu dem Abstützkörper ist. Eine derartige Gewährleistung der Führung über ein Schwenklager kann konstruktiv einfach mit bekannten Ausführungsformen einer Schwenklagerung, insbesondere mit der Lagerung über ein Schwenklagerauge und einen das Schwenklagerauge durchsetzenden Schwenkbolzen, erfolgen. Auch kann eine Schwenklagerung u. U. besonders robust ausgebildet sein.

Möglich ist hierbei, dass das elastische Abstützelement und der Sensor mit unterschiedlichen Hebelarmen oder Abständen zu einer Schwenkachse des Schwenklagers angeordnet sind. Durch die konstruktive Gestaltung der Länge der unterschiedlichen Hebelarme kann für den Fall des Einsatzes des Sensors konstruktiv weiter Einfluss auf die Größe der Auslenkung des Sensors genommen werden. Andererseits können infolge der unterschiedlichen Hebelarme oder Abstände das Abstützelement und der Sensor versetzt zwischen der Werkzeugbacke und dem Abstützkörper angeordnet sein, wodurch sich unter Umständen ein besonders kompaktes Design ergibt. Möglich ist hierbei, dass der Sensor einen größeren Hebelarm oder Abstand hat als das Abstützelement (oder umgekehrt). Vorzugsweise ist die Differenz der beiden Hebelarme oder Abstände größer als die Summe der maximalen halben Erstreckungen des Abstützelements und des Sensors in Richtung der Hebelarme oder Abstände oder in Richtung der Haupterstreckung der Werkzeugbacke, womit sich zwischen dem Abstützelement und dem Sensor auch ein Zwischenraum ergeben kann.

Möglich ist durchaus, dass das Schwenklager, welches die Führung bildet, ausschließlich der Führung der Werkzeugbacke gegenüber dem Abstützkörper dient. Möglich ist aber für einen weiteren Vorschlag der Erfindung auch, dass das Schwenklager (insbesondere ein Schwenkbolzen desselben) multifunktional ist. In diesem Fall bildet das Schwenklager (insbesondere der Schwenkbolzen) auch ein Schwenklager für ein weiteres Bauelement wie bspw. die andere Werkzeugbacke, wobei das weitere Bauelement relativ zu der Werkzeugbacke, die über das Abstützelement abgestützt ist, verschwenkbar ist. Hierdurch ergibt sich ein kompaktes Design mit einer Reduzierung der Zahl der Bauelemente.

Durchaus möglich ist, dass die Werkzeugbacke an dem Sensor und/oder dem Abstützelement befestigt sind/ist. Für eine besondere Ausgestaltung der Erfindung liegt die Werkzeugbacke lose an dem Sensor und/oder dem Abstützelement an. Dieses ist bspw. hinsichtlich der Toleranzen für die Fertigung der Bauelemente des Werkzeugs und/oder den Ort der Anordnung des Sensors und/oder des Abstützelements von Vorteil. Unter Umständen ist dann auch ein Austausch des Sensors und/oder des Abstützelements oder die Verwendung unterschiedlicher Abstützelemente vereinfacht.

Für das lose Anliegen der Werkzeugbacke an dem Sensor und/oder dem Abstützelement wird die Verbindung zwischen Werkzeugbacke und Sensor und/oder Abstützelement über den Arbeitshub mit sich vergrößernder Arbeitskraft geschaffen und/oder verstärkt, indem sich die Anpresskraft zwischen Werkzeugbacke und Sensor und/oder Abstützelement entsprechend der sich vergrößernden Arbeitskraft vergrößert.

Die Erfindung schlägt des Weiteren vor, dass die Werkzeugbacke, der Sensor und/oder das Abstützelement über eine u. U. vorgespannte Feder in Richtung des Messfreiheitsgrads beaufschlagt ist/sind. Hierbei wirkt die Feder insbesondere in Öffnungsrichtung der Werkzeugbacke. Für den Fall, dass die Werkzeugbacke lose an dem Sensor und/oder dem Abstützelement anliegt, kann die Feder die Werkzeugbacke an den Sensor und/oder das Abstützelement anpressen, womit eine gewisse Vorspannung des Abstützelements und/oder die Beaufschlagung des Sensors mit einem Grundniveau einer Sensorkraft auch ohne wirkende Arbeitskraft erfolgen kann. Unter Umständen teilt sich auch die Federkraft der Feder auf einerseits in eine Feder-Abstützkraft, die auf das Abstützelement wirkt, und eine Feder-Sensorkraft, die auf den Sensor wirkt. Ebenfalls möglich ist, dass über die Feder ein "Schlackern" der Werkzeugbacke verringert oder vermieden wird, wenn die Werkzeugbacke lose an dem Sensor und/oder dem Abstützelement anliegt.

Für die Ausgestaltung des elastischen Abstützelements gibt es vielfältige Möglichkeiten. Hierbei kann das elastische Abstützelement ein einzelnes Federelement aufweisen oder auch mehrere Federelemente aufweisen, die in mechanischer Reihenschaltung oder Parallelschaltung wirken. Das elastische Abstützelement kann hierbei gezielt mit einer in Richtung des Messfreiheitsgrads wirksamen linearen oder nichtlinearen Federsteifigkeit ausgebildet sein, welche auch an die Charakteristik der wirksamen Führung und/oder eine Charakteristik des Sensors angepasst sein kann.

Für einen besonderen Vorschlag der Erfindung weist das elastische Abstützelement einen Elastomerkörper auf. Durch die Wahl der Geometrie des Elastomerkörpers (insbesondere des wirksamen Querschnitts quer zum Messfreiheitsgrad und die wirksame Länge in Richtung der Messfreiheitsgrads) sowie die Wahl des Materials des Elastomerkörpers kann die Steifigkeit des elastischen Abstützelements konstruktiv vorgegeben werden.

Für einen Vorschlag der Erfindung weist das elastische Abstützelement einen metallischen Federkörper auf. Um lediglich einige nicht beschränkende Beispiele zu nennen, kann der metallische Federkörper als Blattfeder oder Biegebalken oder als auf Zug oder Druck beanspruchte Spiralfeder ausgebildet sein.

Für ein weiteres erfindungsgemäßes Press-, Crimp- oder Schneidwerkzeug weist dieses einen Werkzeugkopf auf, welcher über einen Arbeitshub nicht bewegbar ist. Beispielsweise kann der Werkzeugkopf für die Ausgestaltung des Werkzeugs in Plattenbauweise mit Deckplatten ausgebildet sein. An dem Werkzeugkopf können dann über eine Führung, insbesondere einen gemeinsamen Schwenkbolzen oder über eine Linearführung, beide Werkzeugbacken geführt sein, wobei die Führung dann auch die Abstützung der Werkzeugbacke an dem Abstützkörper mit dem verbleibenden Messfreiheitsgrad gewährleistet. In diesem Fall verläuft der Kraftfluss der Arbeitskraft von der Schwenkbacke über das Abstützelement und u. U. den Sensor zu dem Werkzeugkopf. Hierbei kann der Werkzeugkopf unmittelbar den Abstützkörper ausbilden oder der Abstützkörper ist (oder mehrere separate Abstützkörperteile sind) an dem Werkzeugkopf, insbesondere den Deckplatten, unmittelbar oder mittelbar abgestützt oder befestigt.

Eine weitere Ausgestaltung des Press-, Crimp- oder Schneidwerkzeugs betrifft die Gestaltung des Werkzeugkopfs mit mindestens einer Deckplatte, die den Schwenkbolzen trägt und an welcher das Abstützelement (unmittelbar oder mittelbar über den Abstützkörper) abgestützt ist, wobei auch der Sensor an der Deckplatte abgestützt oder gehalten sein kann.

Eine besonders kompakte Ausgestaltung kann sich ergeben, wenn mindestens eine Deckplatte eine Ausnehmung aufweist, in welche oder durch welche sich das Abstützelement und/oder der Sensor erstrecken/erstreckt. Diese Ausführungsform ist insbesondere dann von Bedeutung, wenn die Erstreckung des Werkzeugkopfs, insbesondere der Außenabstand von zwei Deckplatten, in eine Richtung quer zur Schwenkebene der Werkzeugbacken kleiner gewählt wird als die Erstreckung des Abstützelements und/oder des Sensors in diese Richtung. In diesem Fall kann grundsätzlich die Erstreckung des Werkzeugkopfs in diese Richtung klein gehalten werden, während das Abstützelement und/oder der Sensor mit dem Werkzeugkopf oder der Deckplatte "verschachtelt" ist oder den Werkzeugkopf oder die Deckplatte zumindest teilweise durchsetzt.

Die Erfindung schlägt für die Ausgestaltung des Sensors insbesondere zwei mögliche Varianten vor:
a) Möglich ist, dass der Sensor ein Wegsensor ist. Da die Werkzeugbacke über das Abstützelement an dem Abstützkörper abgestützt ist, ergibt sich je nach Beaufschlagung der Werkzeugbacke und damit des Abstützelements mit einer Presskraft, Crimpkraft oder Schneidkraft (hier auch "Arbeitskraft") eine Verschiebung der Werkzeugbacke in Richtung des Messfreiheitsgrades. Diese Verschiebung kann durch ein Messsignal des Wegsensors erfasst werden, wobei dann das Messsignal in die wirkende Arbeitskraft umgerechnet werden kann. Ein Umrechnungsfaktor hängt hierbei von der Steifigkeit des Abstützelements (und für den Fall einer schwenkbaren Lagerung der beiden Werkzeugbacken von den Abständen des Wegsensors und des elastischen Abstützelements von der Schwenkachse) ab.
b) Möglich ist alternativ, dass der Sensor als Kraftsensor ausgebildet ist. Über die mechanische Parallelschaltung des Abstützelements und des Kraftsensors kann eine Arbeitskraft, welche auf die Werkzeugbacke wirkt, aufgeteilt werden einerseits in eine Abstützkraft, welche auf das elastische Abstützelement wirkt, und andererseits in eine Sensorkraft, die auf den Kraftsensor wirkt. Je nach Anordnung, Geometrie und Steifigkeit des elastischen Abstützelements kann damit auch der Betrag der auf den Kraftsensor wirkenden maximalen Sensorkraft konstruktiv vorgegeben werden. So kann bspw. bei einer verhältnismäßig großen Steifigkeit des elastischen Abstützelements die Sensorkraft über den Arbeitshub verhältnismäßig klein gehalten werden, womit erfindungsgemäß erstmals ein Kraftsensor eines Typs eingesetzt werden kann, für welchen der Fachmann für die hier einschlägigen Werkzeuge ohne Kenntnis der Erfindung vermutet hätte, dass ein derartiger Kraftsensor bei Einsatz in einem Press-, Crimp- oder Schneidwerkzeug infolge der hohen wirkenden Arbeitskräfte zerstört werden würde. Werden gleiche oder unterschiedliche Werkzeuge für unterschiedliche Gesenke und/oder Anwendungen mit unterschiedlichen maximalen Arbeitskräften genutzt, kann durch eine Auswechslung oder eine Anpassung des elastischen Abstützelements und eine hieraus resultierende Veränderung der Aufteilung der Arbeitskraft auf die Sensorkraft und die Abstützkraft dennoch der Einsatz desselben Kraftsensors ermöglicht werden. Um lediglich einige nicht beschränkende Beispiele zu nennen, kann die von dem Abstützelement aufgenommene Abstützkraft um zumindest den Faktor 10, 20, 50, 100 oder sogar 300 größer sein als die von dem Kraftsensor aufgenommene Sensorkraft.

Für den Fall, dass vermieden werden soll, dass der Kraftsensor mit übermäßigen Sensorkräften beaufschlagt wird, was zu einer Beschädigung des Kraftsensors führen könnte, schlägt die Erfindung vor, dass das Press-, Crimp- oder Schneidwerkzeug eine Begrenzungseinrichtung aufweist. Mittels der Begrenzungseinrichtung wird die auf den Kraftsensor wirkende Sensorkraft begrenzt. Für die Ausgestaltung der Begrenzungseinrichtung gibt es vielfältige Möglichkeiten. So kann bspw. für eine gewisse Bewegung der Werkzeugbacke entlang des Messfreiheitsgrads mit der damit einhergehenden elastischen Beaufschlagung des elastischen Abstützelements die Werkzeugbacke zur Anlage an einen Anschlag, bspw. des Abstützkörpers oder des Werkzeugkopfs, kommen. Infolge der Anlage an den Anschlag führt eine weitere Erhöhung der Arbeitskraft dazu, dass eine weitere Kraftkomponente der Arbeitskraft über den Anschlag abgestützt wird. Für den Fall eines starren Anschlags begrenzt dieser die Sensorkraft auf die Sensorkraft, die wirkt, wenn die Werkzeugbacke gerade zur Anlage an den Anschlag kommt. Handelt es sich um einen elastischen Anschlag, stellt der elastisch abgestützte Anschlag eine weitere Abstützfeder zur Verfügung, welche der elastischen Abstützung über das Abstützelement parallel geschaltet ist. Eine weitere mögliche Möglichkeit einer Ausgestaltung einer Begrenzungseinrichtung ist der Einsatz einer Rutschkupplung. Beispielsweise kann die Rutschkupplung in dem Kraftfluss zwischen dem Kraftsensor und/oder dem Abstützelement und der Werkzeugbacke und/oder dem Abstützkörper wirken, so dass mit einem Durchrutschen der Rutschkupplung mit der Überschreitung eines vorgegebenen Schwellwerts der Arbeitskraft der Kraftsensor nicht weiter mit einer Sensorkraft beaufschlagt wird. Möglich ist aber auch, dass die Rutschkupplung in den Antriebsmechanismus des Press-, Crimp- oder Schneidwerkzeugs integriert ist, so dass die Betätigungskräfte des Press-, Crimp- oder Schneidwerkzeugs begrenzt werden, womit dann mittelbar auch die Sensorkraft begrenzt wird. Ein Beispiel einer derartigen Begrenzungseinrichtung ist bspw. in der Druckschrift EP 2 826 598 B1 beschrieben. Eine besonders einfache Begrenzungseinrichtung kann geschaffen werden, wenn das elastische Abstützelement so gestaltet und dimensioniert ist, dass dieses für das Erreichen einer maximalen Abstützkraft "auf Block geht", womit eine weitere Verformung nicht mehr möglich ist und eine weitere Erhöhung der Arbeitskraft nicht zu einer Erhöhung der Sensorkraft, sondern lediglich zu einer Erhöhung der Abstützkraft, führt.

Im Rahmen der Erfindung kann grundsätzlich ein beliebiger Kraftsensor Einsatz finden. Für einen besonderen Vorschlag der Erfindung weist der Kraftsensor einen elastischen Sensorkörper auf. Um lediglich einige nicht beschränkende Beispiele zu nennen, kann der elastische Sensorkörper als Halbkugel oder Kalotte, als Halbzylinder oder beliebig anders geformter Elastomerkörper ausgebildet sein. Der Sensorkörper bildet eine Kontaktfläche mit einer Sensorfläche des Kraftsensors aus. Wirkt auf den elastischen Sensorkörper die Sensorkraft, führt dies zu einer elastischen Verformung des Sensorkörpers, womit einhergeht, dass sich die Größe der Kontaktfläche zwischen dem elastischen Sensorkörper und der Sensorfläche verändert. Hierbei ist die Größe der Kontaktfläche über eine feste Abhängigkeit von der auf den Kraftsensor wirkenden Sensorkraft abhängig. Der Kraftsensor ermittelt dann die Größe der Kontaktfläche und wandelt die ermittelte Größe der Kontaktfläche (insbesondere über die zuvor genannte feste Abhängigkeit, ein Kennfeld, eine Kalibrierkurve, eine a priori vorgegebene Umwandlungsfunktion) um in ein Kraftmesssignal.

Für die Art der Ermittlung der Größe der Kontaktfläche in dem Kraftsensor können beliebige Messprinzipien Einsatz finden. So kann bspw. ein Übergangswiderstand zwischen dem elastischen Sensorkörper und der Kontaktfläche, welcher abhängig ist von der Größe der Kontaktfläche, ausgewertet werden. Möglich ist auch, dass die Sensorfläche des Kraftsensors als Reihe oder Matrix mit Kontakten oder Schaltern ausgebildet ist. So können sehr viele kleine Kontakte oder Schalter an der Sensorfläche vorhanden sein, die über den Kontakt mit dem elastischen Sensorkörper geschaltet werden. Mit Vergrößerung der Kontaktfläche des Sensorkörpers mit der Sensorfläche werden mehr Kontakte oder Schalter geschlossen, so dass bei Erfassung der Zahl der betätigten Kontakte oder Schalter ein Rückschluss auf die Kontaktfläche (und damit auf die Sensorkraft) möglich ist. Möglich ist hierbei, dass lediglich die Sensorfläche elektrifiziert ist, wobei dann eine Betätigung der Schalter der Sensorfläche durch den elastischen Sensorkörper erfolgt. Möglich ist aber auch, dass eine Reihe oder Matrix von Kontakten in der Sensorfläche vorhanden ist. In diesem Fall ist auch der elastische Sensorkörper elektrifiziert. Kommt dann der elastische Sensorkörper mit einem Kontakt der Sensorfläche in Kontakt, erfolgt eine Erstellung einer elektrischen Verbindung, welche dann ausgewertet werden kann. Über die Zahl der derart festgestellten herbeigeführten elektrischen Kontakte oder betätigten Schalter je nach Größe der Kontaktfläche kann dann auf die Sensorkraft rückgeschlossen werden. Im Rahmen der Erfindung kann eine eindimensionale Reihe oder eine zweidimensionale Matrix (eben oder gekrümmt) von Kontakten oder Schaltern Einsatz finden. Für den Fall einer zweidimensionalen Matrix mit Kontakten oder Schaltern korreliert die Zahl der betätigten Kontakte oder Schalter ungefähr der Größe der Kontaktfläche. Hingegen kann bei Einsatz einer eindimensionalen Reihe von Kontakten oder Schaltern eine repräsentative Erstreckung der Kontaktfläche (bspw. der Durchmesser einer kreisförmigen Kontaktfläche oder eine Abmessung einer elliptischen Kontaktfläche entlang einer Halbachse) ausgewertet werden.

Möglich ist in diesem Zusammenhang, dass erstmalig im Rahmen der Erfindung für die Ausbildung des Kraftsensors eine Gestaltung gemäß der Druckschrift DE 102 28 185 A1 eingesetzt wird, die an sich einen Sensor für einen anderen Technologiebereich als Werkzeuge betrifft:
Die Druckschrift DE 102 28 185 A1 offenbart einen manuell über einen Finger betätigten Eingabesensor, der abnehmbar auf einem Touchscreen oder an einem Gehäuse eines Palm-Computers oder Smartphones angeordnet werden kann. Ein derartiger Eingabesensor soll bspw. als Art kleiner Joystick oder sogenannter Trackpoint zur Steuerung eines Mauszeigers Einsatz finden. Der in DE 102 28 185 A1 vorgeschlagene Eingabesensor verfügt über eine von dem Finger gegen eine Feder betätigte Eingabeplatte oder einen Eingabeknopf. Auf der Unterseite verfügt die Eingabeplatte über eine Kalotte, welche je nach mit dem Finger auf die Eingabeplatte ausgeübter Eingabekraft gegen eine Kontaktmatrix gepresst wird. Je nach Eingabekraft verändert sich die Kontaktfläche zwischen der Kalotte und der Kontaktmatrix. Die Kalotte verfügt auf der der Kontaktmatrix zugewandten Seite über eine elektrisch leitende Kontaktbeschichtung. Je nach Eingabekraft und Größe der Kontaktfläche ändert sich die Zahl der zwischen der Kontaktbeschichtung der Kalotte und der Kontaktmatrix gebildeten Kontakte. Mit der Auswertung der Zahl der geschlossenen Kontakte kann somit auf die wirkende Eingabekraft rückgeschlossen werden. Ist die Eingabeplatte nicht lediglich translatorisch vertikal zur Kontaktmatrix bewegbar und federnd abgestützt, sondern kann diese auch um mindestens eine quer zur Eingabekraft wirkende Schwenkachse verschwenkt werden, kann aus einer Verlagerung der Kontaktfläche zwischen der Kontaktmatrix und der Kontaktbeschichtung auf eine Verschwenkung der Eingabeplatte rückgeschlossen werden, womit der Eingabesensor auch als eine Art Kippschalter verwendet werden kann. Die Kontaktmatrix besteht aus einer Vielzahl von elektrischen Einzelkontakten in gereihter Kontaktanordnung, die auf einer als Platine ausgebildeten Basisplatte aufgebracht sein können. Ist die Kalotte selber aus einem elektrisch leitfähigen Material hergestellt, kann auf deren Kontaktbeschichtung verzichtet werden. Über die Wahl der Größe und der Steifigkeit der Kalotte kann eine Sensitivität des Eingabesensors auf die von dem Finger applizierten Eingabekraft erfolgen. Möglich ist auch, dass die Kontaktmatrix mit gitterartig angeordneten Leiterbahnen gebildet ist, wobei bei einer großen Zahl von Kontaktpunkten Leiterbahnen in unterschiedlich elektrisch getrennten Ebenen verlegt sein können. Alternativ zu einer Kontaktbeschichtung der Kalotte oder der elektrisch leitfähigen Ausbildung der Kalotte kann zwischen der Eingabeplatte und den Leiterbahnen eine Polyester-Domfolie angeordnet sein, die einerseits die Funktion der Federung der Eingabeplatte und andererseits mit einer leitfähigen Beschichtung auf der Unterseite (bspw. aus Kohlenstoff, Metall o. ä.) die Funktion des Kontaktmediums erfüllt. Eine Auflösung der erfassten Eingabekraft kann durch die Wahl der Zahl der Matrixelemente der Kontaktmatrix beeinflusst werden. Die Offenbarung der Druckschrift DE 102 28 185 A1 wird durch die vorliegende Bezugnahme zum Gegenstand der Offenbarung dieser Patentanmeldung gemacht.

In weiterer Ausgestaltung der Erfindung weist das Press-, Crimp- oder Schneidwerkzeug eine elektronische Steuereinheit zur Auswertung des Messsignals des Sensors auf. Hierbei kann die elektronische Steuereinheit mit weiteren elektrischen oder elektronischen Komponenten zusammenwirken, bspw.
- einer binären oder gestuften Anzeige oder Dioden, welche signalisieren, ob ein Verlauf der Sensorkraft oder des Sensorweges oder eine maximale Sensorkraft oder maximaler Sensorweg innerhalb vorgegebener Grenzen mit dem idealen Verlauf oder einem idealen Maximum übereinstimmt,
- einer kontinuierlichen Anzeige oder einem Display für die Anzeige eines Kurvenverlaufs oder repräsentativer Werte der Arbeitskraft oder Sensorkraft oder des Sensorweges,
- einer Speichereinheit zur Speicherung und späteren Dokumentation des Verlaufs der Arbeitskraft während eines Arbeitshubs u. ä.

In weiterer Ausgestaltung der Erfindung ist die elektronische Steuereinheit mit Steuerlogik ausgestattet. Die Steuerlogik ermittelt das Kraftmesssignal aus einem mit der Größe der Kontaktfläche korrelierenden elektrischen Kontaktflächensignal unter Berücksichtigung eines Kalibrierfaktors, einer Kalibrierkurve oder eines Kennfeldes oder unter Berücksichtigung einer Abhängigkeit der Größe der Kontaktfläche von der auf den Kraftsensor wirkenden Sensorkraft, unter Berücksichtigung eines Hebelarms der Sensorkraft, unter Berücksichtigung einer Federcharakteristik des elastischen Abstützelements und/oder unter Berücksichtigung eines Hebelarms der Abstützkraft. Hierbei können der Kalibrierfaktor, die Kalibrierkurve oder das Kennfeld, die Abhängigkeit, die Hebelarme und/oder die Federcharakteristik a priori bekannt sein und/oder in einem permanenten, der elektronischen Steuereinheit zugeordneten Speichereinheit gespeichert sein. Möglich ist aber auch, dass (werkseitig oder bei dem Benutzer bei der erstmaligen Aufnahme der Benutzung, bei einer Reparatur oder in beliebigen Nachkalibrierungsintervallen) der Kalibrierfaktor, die Kalibrierkurve oder das Kennfeld, die Abhängigkeit, die Hebelarme und/oder die Federcharakteristik "angelernt" oder über die elektronische Steuereinheit eingegeben werden.

Für einen weiteren Vorschlag der Erfindung weist die elektronische Steuereinheit Steuerlogik auf, mittels welcher eine Kalibrierung des Werkzeugs für Bearbeitungsvorgänge möglich ist. Auf Grundlage dieser Steuerlogik sind die folgenden Schritte ausführbar:
a) Zunächst kann eine Initiierung einer Durchführung eines Kalibrier-Arbeitshubes oder mehrerer Kalibrier-Arbeitshübe erfolgen. Beispielsweise kann das Werkzeug einen außen zugänglichen Knopf oder Schalter oder eine schnurgebundene oder schnurlose Einrichtung aufweisen, mit deren Betätigung die Durchführung der Kalibrier-Arbeitshübe initiiert werden kann. Möglich ist, dass diese Initiierung werkseitig beim Hersteller erfolgt oder dieses auch bei einem Abnehmer oder Benutzer des Werkzeugs erfolgt. Des Weiteren kann die Kalibrierung initiiert werden, um unabhängig von dem Einsatzzweck eine erste Kalibrierung oder Nachkalibrierung des Werkzeugs vorzunehmen. Ebenfalls möglich ist aber auch, dass eine individuelle Kalibrierung des Werkzeugs für einen spezifischen Einsatzzweck erfolgt, was dann vorzugsweise durch den Abnehmer oder Benutzer des Werkzeugs erfolgt. Soll beispielsweise mit dem Werkzeug für einen spezifischen Einsatzzweck ein bestimmter Typ eines Steckers mit einem bestimmten Typ von Kabel vercrimpt werden, kann nach der Initiierung die Durchführung mehrerer Kalibrier-Arbeitshübe an mehreren Exemplaren dieses Typs von Stecker sowie dieses Typs von Kabel erfolgen. Nach der Durchführung der Kalibrierung können dann mit dem Werkzeug diese Typen von Stecker mit den zugeordneten Typen von Kabeln vercrimpt werden. Soll dann zu einem späteren Zeitpunkt das Werkzeug für Stecker und/oder Kabel anderer Typen verwendet werden, kann eine neue Kalibrierung initiiert und durchgeführt werden.
b) Ist eine Kalibrierung wie zuvor erläutert initiiert, wird ein Kalibrier-Arbeitshub oder werden mehrere Kalibrier-Arbeitshübe durchgeführt. Hierbei werden die Messsignale des Sensors erfasst. Sind diese Kalibrier-Arbeitshübe ordnungsgemäß durchgeführt worden, liegen somit repräsentative Messsignale vor, anhand welcher dann für die folgende Benutzung des Werkzeugs eine Überwachung der ordnungsgemäßen Durchführung der Arbeitshübe erfolgen kann. Für das unter a) genannte Beispiel stellen diese repräsentativen Messsignale die Kraft- oder Wegsignale dar, welche bei dem ordnungsgemäßen Vercrimpen des genannten Typs des Steckers sowie des zugeordneten Typs eines Kabels auftreten.
c) Aus den während der Kalibrier-Arbeitshübe aufgenommenen Messsignalen werden dann repräsentative Daten, ein Kalibrierfaktor, eine Kalibrierkurve oder ein Kennfeld und/oder repräsentative Schwankungen aus mehreren Messsignalen ermittelt. Für das unter a), b) angeführte Beispiel kann als repräsentativer Wert beispielsweise das Maximum oder ein Mittelwert der Maximal der Messsignale ermittelt und verwendet werden. Möglich ist auch, dass zusätzlich zu dem Maximum der Messsignale oder einem Mittelwert der jeweiligen Maxima die Schwankungsbreite des Maximums für die mehreren Kalibrier-Arbeitshübe ermittelt wird. So kann beispielsweise bei der Nutzung des Werkzeugs zum Vercrimpen spezifischer Typen von Steckern und Kabeln mittels der Kalibrier-Arbeitshübe bestimmt worden sein, dass das Maximum des Messsignals im Bereich von 95% bis 105% einer Kenngröße liegen kann. Um lediglich einige weitere nicht beschränkende Beispiele zu nennen, können repräsentative Daten auch ein Anstieg des Messsignals mit der Zeit oder ein Anstieg des Messsignals in Abhängigkeit eines Wegsignals, welches mit dem Weg von Handhebeln des Werkzeugs während des Arbeitshubs oder eines mit den Handhebeln antriebsverbundenen Antriebselements korreliert, sein.
d) Unter Verwendung der repräsentativen Daten, des Kalibrierfaktors, der Kalibrierkurve, des Kennfeldes und/oder der repräsentativen Schwankungen erfolgt dann eine Beurteilung der Qualität von Bearbeitungsvorgängen mit dem Werkzeug nach Abschluss der Kalibrierung. Wird für das vorgenannte Beispiel nach der Kalibrierung das Werkzeug für ein Vercrimpen genutzt und wird während des Arbeitshubes lediglich ein Maximum des Messsignals von 90% oder 110% erreicht, liegt ein Indikator dafür vor, dass die Qualität des durchgeführten Bearbeitungsvorganges nicht ausreichend ist.
Möglich ist auch, dass je nach Fertigungstoleranzen mehrerer baugleicher Werkzeuge der absolute Betrag des Messsignals für ideale gleiche Kalibrier-Arbeitshübe unterschiedlich ist. Bei Nutzung einer relativen Abweichung eines Maximums während eines Bearbeitungsvorgangs von dem Maximum des spezifischen Werkzeugs für die Kalibrier-Arbeitshübe wie zuvor erläutert kann aber eine zuverlässige Beurteilung der Qualität des Bearbeitungsvorgangs unabhängig von den Fertigungstoleranzen und von den daraus resultierenden unterschiedlichen absoluten Beträgen des Messsignals erfolgen.

Das Ergebnis der zuvor erläuterten Auswertung kann auf vielfältige Weise genutzt werden. Um lediglich ein nicht beschränkendes Beispiel zu nennen, kann an dem Werkzeug, beispielsweise durch eine Warnleuchte oder Diode, dem Benutzer signalisiert werden, dass die Qualität des durchgeführten Bearbeitungsvorgangs unzureichend ist. Möglich ist auch, dass eine Speicherung des Ergebnisses der Auswertung erfolgt, sodass das Ergebnis später ausgelesen werden kann und/oder zu Dokumentationszwecken herangezogen werden kann.

Eine weitere Lösung der der Erfindung zugrunde liegenden Aufgabe ist gegeben durch eine Werkzeuggruppe. Diese Werkzeuggruppe verfügt über mindestens ein erstes Press-, Crimp-oder Schneidwerkzeug sowie mindestens ein zweites Press-, Crimp- oder Schneidwerkzeug. Hierbei sind das erste sowie zweite Press-, Crimp- oder Schneidwerkzeug wie zuvor dargelegt ausgebildet, aber Press-, Crimp oder Schneidwerkzeuge unterschiedlicher Typen und/oder für unterschiedliche maximale Arbeitskräfte bestimmt. Erfindungsgemäß verfügen das erste Press-, Crimp- oder Schneidwerkzeug einerseits und das zweite Press-, Crimp- oder Schneidwerkzeug andererseits über gleiche Sensoren, aber unterschiedliche Abstützelemente. In diesem Fall kann ein hoher Gleichanteil erzielt werden infolge des Einsatzes derselben Sensoren trotz der unterschiedlichen Typen der Press-, Crimp- oder Schneidwerkzeuge und/oder unterschiedlichen maximalen Arbeitskräfte. Dies kann dadurch gewährleistet werden, dass unterschiedliche Abstützelemente Einsatz finden, welche sich insbesondere durch ihre wirksamen Steifigkeiten unterscheiden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also bspw. von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Prinzipskizze eines Teils eines Press-, Crimp- oder Schneidwerkzeugs mit einer Werkzeugbacke, welche über einen Kraftsensor mit parallel geschaltetem elastischem Abstützelement abgestützt ist (hier mit einem SchwenkFreiheitsgrad der Werkzeugbacke und einem Schwenk-Messfreiheitsgrad).
- **Fig. 2**: zeigt eine konstruktive Ausgestaltung einer manuell betätigten Press-, Crimpoder Schneidzange in einer räumlichen teildemontierten Darstellung.
- **Fig. 3, 5, 7**: zeigen in einer Seitenansicht einen Kraftsensor mit unterschiedlichen wirkenden Sensorkräften.
- **Fig. 4, 6, 8**: zeigen die sich ergebenden unterschiedlichen Kontaktflächen zwischen einer Sensorfläche und einem elastischen Sensorkörper des Kraftsensors für die unterschiedlichen Sensorkräfte gemäß Fig. 3, 5 und 7.
- **Fig. 9**: zeigt ein Detail IX des Kraftsensors gemäß Fig. 7.
- **Fig. 10**: zeigt eine Draufsicht einer Kontaktfläche eines elastischen Sensorkörpers mit einer Sensorfläche des Kraftsensors, welche als Matrix von Kontakten oder Schaltern ausgebildet ist.
- **Fig. 11**: zeigt schematisch unterschiedliche Kennlinien von Kraftsensoren, bspw. für unterschiedliche Einbaubedingungen und/oder Toleranzen.
- **Fig. 12 bis 15**: zeigen Press-, Crimp- oder Schneidwerkzeuge mit unterschiedlichen elastischen Abstützelementen.
- **Fig. 16**: zeigt in einer räumlichen Ansicht ein Press-, Crimp- oder Schneidwerkzeug, bei welchem sich ein Abstützelement durch eine Ausnehmung einer Deckplatte des Werkzeugkopfes erstreckt.
- **Fig. 17**: zeigt schematisch einen Kraftsensor mit integrierter Begrenzungseinrichtung für den Sensorhub des Kraftsensors.
- **Fig. 18**: zeigt schematisch eine zwischen Werkzeugbacke und Abstützkörper oder Werkzeugkopf wirkende Begrenzungseinrichtung im Umgebungsbereich eines Kraftsensors.
- **Fig. 19**: zeigt eine Prinzipskizze eines Teils eines Press-, Crimp- oder Schneidwerkzeugs mit einer Werkzeugbacke, welche über einen Kraftsensor mit parallel geschaltetem elastischem Abstützelement abgestützt ist (hier mit einem translatorischen Freiheitsgrad der Werkzeugbacke und einem translatorischen Messfreiheitsgrad).

### FIGURENBESCHREIBUNG

In der folgenden Beschreibung wird auf einen Sensor mit dem Bezugszeichen 84 Bezug genommen. Bei dem Sensor 84 kann es sich um einen Kraftsensor 16 oder einen Wegsensor 77 handeln. Bevorzugt wird in der Beschreibung auf die Ausbildung des Sensors 84 als Kraftsensor 16 Bezug genommen, wobei das Entsprechende dann aber auch für die Ausbildung des Sensors 84 als Wegsensor 77 gelten kann.

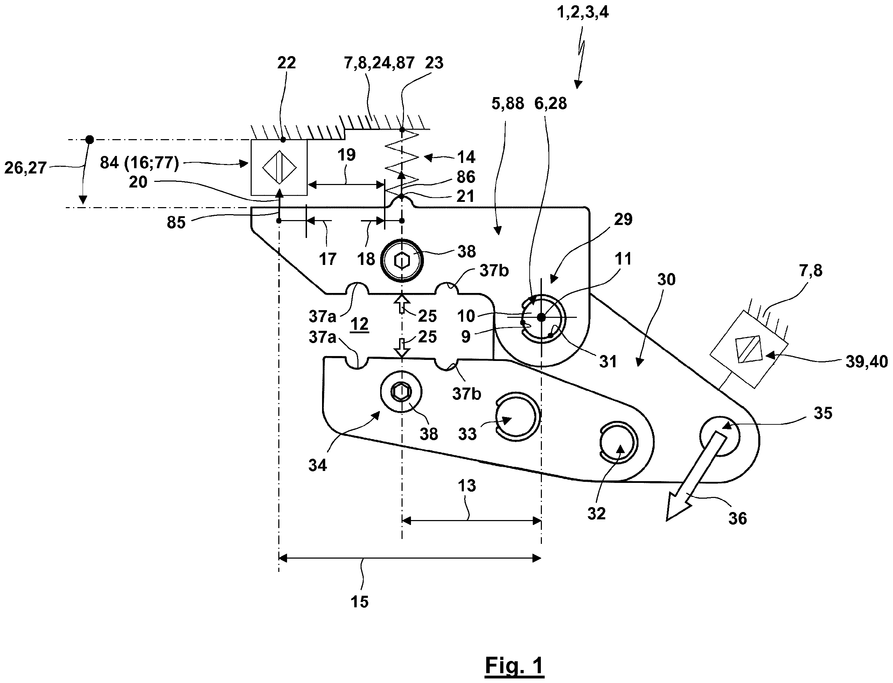

**Fig. 1** zeigt stark schematisiert in einer Prinzipskizze ein Presswerkzeug 1, Crimpwerkzeug 2 oder ein Schneidwerkzeug 3, welches im Folgenden auch vereinfacht als Werkzeug 4 bezeichnet wird. Das Werkzeug 4 verfügt über eine Werkzeugbacke 5. Die Werkzeugbacke 5 ist in einem Schwenklager 6 verschwenkbar gegenüber einem Werkzeugkopf 7, insbesondere einer Deckplatte 8 oder einem Maschinenrahmen, gelagert. Für das dargestellte Ausführungsbeispiel ist das Schwenklager 6 mit einem Lagerauge 9 der Werkzeugbacke 5 sowie einem Schwenkbolzen 10, welcher das Lagerauge 9 durchsetzt, gebildet. Der Schwenkbolzen 10 ist hierbei in einem Endbereich oder auch in beiden Endbereichen an dem Werkzeugkopf 7, insbesondere in Bohrungen von zwei Deckplatten 8, gehalten. Die Werkzeugbacke 5 ist um eine durch den Schwenkbolzen 10 vorgegebene Schwenkachse 11 relativ zu dem Werkzeugkopf 7 verschwenkbar.

Auf einer einer Gesenk- oder Werkstückaufnahme 12 abgewandten Seite ist die Werkzeugbacke 5 mit einem Hebelarm oder Abstand 13 bzgl. der Schwenkachse 11 an einem elastischen Abstützelement 14 abgestützt. Des Weiteren ist die Werkzeugbacke 5 auf der der Gesenk-oder Werkstückaufnahme 12 abgewandten Seite mit einem Hebelarm 15 an einem Sensor 84, insbesondere einem Kraftsensor 16 abgestützt. Findet anstelle des Kraftsensors 16 ein Wegsensor 77 Einsatz, ist dieser mit einem entsprechenden Abstand 15 angeordnet, wobei dann vorzugsweise über den Wegsensor 77 keine Abstützung zusätzlich zu der Abstützung über das Abstützelement 14 erfolgt. Für das dargestellte Ausführungsbeispiel ist der Hebelarm 15 größer als der Hebelarm 13. Vorzugsweise ist die Differenz der Hebelarme 15, 13 größer als die Summe der halben Erstreckung 17 des Kraftsensors 16 und der halben Erstreckung 18 des elastischen Abstützelements 14 in Richtung der Hebelarme 15, 13, womit sich zwischen dem Kraftsensor 16 und dem elastischen Abstützelement 14 ein Zwischenraum 19 ergibt.

Jeweils ein Fußpunkt 20, 21 des Kraftsensors 16 und des elastischen Abstützelements 14 tritt in Wechselwirkung mit der Werkzeugbacke 5, während gegenüberliegende Fußpunkte 22, 23 des Kraftsensors 16 und des elastischen Abstützelements 14 an mindestens einem an dem Werkzeugkopf 7 abgestützten oder unmittelbar von diesem ausgebildeten Abstützkörper 24 abgestützt sind. Der Kraftsensor 16 verfügt über eine eigene Elastizität. Wird die Werkzeugbacke 5 über den Arbeitshub des Werkzeugs 4 mit einer Arbeitskraft 25 beaufschlagt, führt dies zu einer Aufteilung der Arbeitskraft 25 entsprechend den Hebelarmen 13, 15 auf eine auf den Kraftsensor 16 wirkende Sensorkraft sowie eine auf das elastische Abstützelement 14 wirkende Abstützkraft. Infolge der endlichen Steifigkeiten des elastischen Abstützelements 14 und des Kraftsensors 16 kommt es zu einer Veränderung des Abstandes zwischen der Werkzeugbacke 5 und dem Abstützkörper 24. Dies erfolgt durch eine Relativbewegung der Werkzeugbacke 5 und des Abstützkörpers 24 entsprechend einem Messfreiheitsgrad 26, bei welchem es sich für das dargestellte Ausführungsbeispiel um einen relativen Schwenk-Messfreiheitsgrad 27 um das Schwenklager 6 handelt. Die Relativbewegung entlang dem Schwenk-Messfreiheitsgrad 27 ist durch eine Führung 28 geführt, bei welcher es sich für das dargestellte Ausführungsbeispiel um das Schwenklager 6 handelt. Die Relativbewegung führt zu einer Auslenkung 85 des Kraftsensors 16 und einer Auslenkung 86 des elastischen Abstützelements 14.

An dem Werkzeugkopf 7 ist verschwenkbar über ein Schwenklager 29 auch ein Betätigungshebel 30 gelagert. Für das dargestellte Ausführungsbeispiel ist das Schwenklager 29 mit einem Lagerauge 31 des Betätigungshebels 30 und dem Schwenkbolzen 10, der auch das Lagerauge 31 durchsetzt, gebildet. An dem Betätigungshebel 30 ist über zwei Befestigungsbolzen 32, 33 eine weitere Werkzeugbacke 34 befestigt. Die Schwenklager 6, 29 sowie einerseits die Werkzeugbacke 5 und andererseits der Betätigungshebel 30 sowie die Werkzeugbacke 34 verfügen über dieselbe durch den Schwenkbolzen 10 vorgegebene Schwenkachse 11. Der Betätigungshebel 30 weist beabstandet von der Schwenkachse 11 eine Anlenkung 35 auf, über welche eine Betätigungskraft 36 auf den Betätigungshebel 30 appliziert werden kann. Hierbei kann die Betätigungskraft 36
- manuell über Handhebel und eine grundsätzlich bekannte zwischen die Anlenkung 35 und die Handhebel zwischengeordnete Antriebsverbindung oder
- über einen elektrischen, hydraulischen oder pneumatischen Antrieb, ggf. auch mit einer zwischengeschalteten Antriebsverbindung oder einem Antriebsgetriebe,
erzeugt werden. Die Betätigungskraft 36 ist bestrebt, die beiden Werkzeugbacken 5, 34 aufeinander zu zu verschwenken. Befindet sich zwischen den Werkzeugbacken 5, 34, insbesondere zwischen von den Werkzeugbacken 5, 34 getragenen Schneiden oder Gesenken, ein Werkstück, wird dieses infolge der Betätigungskraft 36 verpresst, vercrimpt oder ein- oder durchgeschnitten. Infolge der wirkenden Arbeitskraft 25 an den Werkzeugbacken 5, 34 kommt es dann zur Relativbewegung der Werkzeugbacke 5 gegenüber dem Abstützkörper 24 entlang des Schwenk-Messfreiheitsgrades 27, was mit der Erzeugung einer sich mit weiterer Relativbewegung erhöhenden Sensorkraft und Abstützkraft einhergeht.

Vorzugsweise ist über den Arbeitshub die Schwenkbewegung der Werkzeugbacke 5 um einen Faktor, der größer ist als 5, 10, 20, 50 oder sogar 100 kleiner als die Verschwenkung der Werkzeugbacke 34. Für Ausführungsformen gemäß dem Stand der Technik, in welchen die Werkzeugbacke 5 keinen Messfreiheitsgrad 26 aufweist, wird die Werkzeugbacke 5 auch als "feste Werkzeugbacke" bezeichnet, während die Werkzeugbacke 34 als "bewegliche Werkzeugbacke" bezeichnet wird. Für das dargestellte Ausführungsbeispiel werden die Werkzeugbacken 5, 34 scherenartig um dieselbe Schwenkachse 11 verschwenkt. Vorzugsweise zeigt Fig. 1 mit einer parallelen Ausrichtung der Schwenkbacken 5, 34 das Werkzeug 4 am Ende des Arbeitshubs, ohne dass dies zwingend erforderlich ist. Im Rahmen der Erfindung sind aber durchaus auch Ausführungsformen möglich, bei welchen die Werkzeugbacke 34 infolge des Antriebes um eine Schwenkachse verschwenkt wird, welche beabstandet von der Schwenkachse 11 angeordnet ist.

Grundsätzlich möglich ist, dass die Werkzeugbacken 5, 34 unmittelbar die Schneiden oder Press-oder Crimpgesenke ausbilden. Für das dargestellte Ausführungsbeispiel erfolgt allerdings die Kopplung der Werkzeugbacken 5, 34 mit einem auswechselbaren Press- oder Crimpgesenk jeweils über
- zwei das Press- oder Crimpgesenk durchsetzende Querträger, die passgenau in randoffenen halbzylindrischen Ausnehmungen 37a, 37b der Werkzeugbacken 5, 34 aufgenommen sind, sowie
- eine Befestigungsschraube 38, die fluchtende Bohrungen der Werkzeugbacken 5, 34 sowie der Press- oder Crimpgesenke durchsetzt
(Vgl. zu weiteren Details zu dieser Kopplung die diesbezügliche Offenbarung des Patents DE 198 02 287 C1).

Für das dargestellte Ausführungsbeispiel ist die Werkzeugbacke 5 L-förmig oder abgewinkelt ausgebildet. Das Schwenklager 6 ist in einem Endbereich eines Schenkels des L angeordnet, während an dem anderen Schenkel des L das Press-oder Crimpgesenk abgestützt ist und auf der gegenüberliegenden Seite des anderen Schenkels des L die Abstützung über den Kraftsensor 16 und das elastische Abstützelement 14 an dem Abstützkörper 24 erfolgt.

Optional kann ein weiterer Sensor 39 vorhanden sein, bei welchem es sich für das dargestellte Ausführungsbeispiel um einen Wegsensor 40 handelt. Der Wegsensor 40 erfasst den Weg des Betätigungshebels 30 bei dessen Verschwenkung in einem vorgegebenen Abstand von der Schwenkachse 11, über welchen entsprechend der Antriebscharakteristik der Antriebskinematik der Weg der Werkzeugbacken 34 berechnet werden kann. Liegt sowohl ein Wegsignal des Wegsensors 40 als auch ein Kraftsignal des Kraftsensors 16 vor, kann während eines Arbeitshubes des Werkzeugs 4 ein Kraft-Weg-Kurvenverlauf ermittelt werden. Grundsätzlich kann der Sensor 39 auch als Winkelsensor ausgebildet sein, der über den Arbeitshub einen Schwenkwinkel erfasst. Des Weiteren kann ein als Wegsensor 40 ausgebildeter Sensor 39 unmittelbar einen Hub eines Bauelements der Antriebskinematik, insbesondere einen linearen Hub einer Werkzeugbacke, erfassen.

Für eine abgewandelte Ausführungsform ist auch möglich, dass die Werkzeugbacke 5 unmittelbar an dem Werkzeugkopf 7 abgestützt ist, während die Führung 28, das elastische Abstützelement 14 und der Kraftsensor 16 so in den Kraftfluss zwischen den Antrieb und die Werkzeugbacke 34 integriert sind, dass über die Führung 28 ein Messfreiheitsgrad 26 vorgegeben ist, über welchen dann in mechanischer Parallelschaltung das elastische Abstützelement 14 und der Kraftsensor 16 mit einer Sensorkraft und einer Abstützkraft beaufschlagt werden, welche mit der in dem Kraftfluss wirkenden Betätigungskraft korrelieren.

Des Weiteren kann die Erfindung auch Einsatz finden für Werkzeuge, bei welchen durch einen beliebigen Antrieb eine "bewegliche" Werkzeugbacke translatorisch relativ zu einer anderen "festen" Werkzeugbacke bewegt wird. Um hierfür lediglich ein nicht beschränkendes Beispiel zu nennen, wird auf Crimpzangen der Anmelderin mit den Kennzeichnungen CS 10, CSV 10, CS 30 verwiesen. In diesem Fall können die Führung, der Kraftsensor und das elastische Abstützelement
- entweder zwischen einem Werkzeugkopf oder Rahmen und der ursprünglich "festen Werkzeugbacke", die dann aber entsprechend des Messfreiheitsgrads unter Beaufschlagung des Kraftsensors und Abstützelements bewegbar ist, angeordnet sein und wirken oder
- in den Kraftfluss des Antriebsmechanismus der "beweglichen" Werkzeugbacke integriert sein.

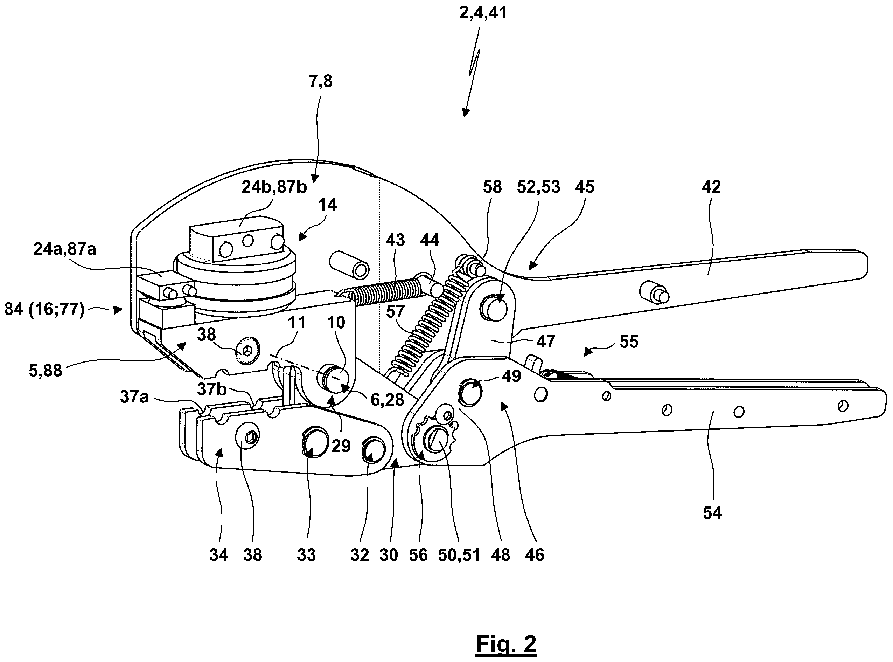

**Fig. 2** zeigt einen Teil eines als Crimpwerkzeug 2 ausgebildeten Werkzeugs 4, wobei es sich hier um eine manuell betätigte Crimpzange 41 handelt. Der Werkzeugkopf 7 weist eine Deckplatte 8 auf, welche einstückig auch einen Handhebel 42 der Crimpzange 41 ausbildet. An dem Werkzeugkopf sind die entsprechend Fig. 1 ausgebildete und miteinander gekoppelte Werkzeugbacke 5, die Werkzeugbacke 34, der Betätigungshebel 30 über den Schwenkbolzen 10 verschwenkbar um die Schwenkachse 11 gelagert. Platten- oder blockartige Abstützkörperteile 24a, 24b für das elastische Abstützelement 14 sowie den Sensor 84, insbesondere den Kraftsensor 16, sind an dem Werkzeugkopf 7 befestigt, insbesondere verschweißt oder verschraubt. Auf der den Abstützkörperteilen 24a, 24b abgewandten Seite des Abstützelements 14 sowie des Kraftsensors 16 liegt lose die Werkzeugbacke 5 an. Die Werkzeugbacke 5 wird in Öffnungsrichtung durch eine vorgespannte Feder 43 beaufschlagt. Für das dargestellte Ausführungsbeispiel ist die Feder 43 als spiralförmige Zugfeder ausgebildet, wobei aber auch andere Ausführungsformen der Feder 43 möglich sind. Ein Federfußpunkt der Feder 43 ist beabstandet von der Schwenkachse 11 an der Werkzeugbacke 5 angelenkt, während der andere Federfußpunkt an einem an dem Werkzeugkopf 7 fixierten Bolzen 44 angelenkt ist. Auch ohne dass zwischen den Werkzeugbacken 5, 34 ein Werkzeug vercrimpt wird, werden somit das elastische Abstützelement 14 und der Kraftsensor 16 mit einer Abstützkraft sowie einer Sensorkraft beaufschlagt, welche von der Vorspannung der Feder 43 abhängig ist.

In Fig. 2 ist auch ein möglicher Antriebsmechanismus 45 zu erkennen, über den die auf die Anlenkung 35 des Betätigungshebels 30 wirkende Betätigungskraft 36 erzeugt werden kann. Hierzu findet ein Kniehebeltrieb 46 Einsatz. Der Kniehebeltrieb 46 weist Kniehebel 47, 48 auf, die über ein Kniegelenk 49 verschwenkbar miteinander verbunden sind. Der dem Kniegelenk 49 abgewandte Endbereich des Kniehebels 48 ist über ein Schwenklager 50, welches hier mit einem Schwenkbolzen 51 gebildet ist, an der Anlenkung 35 des Betätigungshebels 30 angelenkt. Der dem Kniegelenk 49 abgewandte Endbereich des Kniehebels 47 ist über ein Schwenklager 52, hier einen Schwenkbolzen 53, an dem Werkzeugkopf 7 angelenkt. In der Strecklage des Kniehebeltriebs 46 sind die Kniehebel 47, 48 ungefähr vertikal zur Verbindungsachse zwischen dem Schwenklager 50 und dem Schwenklager 6 orientiert. Vorzugsweise befindet sich aber der Kniehebeltrieb 46 mit dem Erreichen der Schließstellung der Werkzeugbacken 5, 34 kurz vor der Strecklage, ohne dass die Strecklage während des Arbeitshubs durchlaufen wird.

Einstückig mit dem Kniehebel 48 ist ein beweglicher Handhebel 54 ausgebildet. Mit der Verschwenkung der Handhebel 42, 54 aufeinander zu bewegt sich der Kniehebeltrieb 46 in Richtung seiner Strecklage, was mit der Erzeugung einer Betätigungskraft 36, welche in Schließrichtung auf die Werkzeugbacken 5, 34 wirkt, einhergeht. In an sich bekannterWeise kann die Crimpzange 41 mit einem Zwangsgesperre 55 ausgestattet sein, welches bei einem nicht vollständigen Durchlaufen des Arbeitshubs eine erreichte Schließstellung der Handhebel 42, 54 sowie der Werkzeugbacken 5, 34 sichert und eine wieder Öffnung der Handhebel 42, 54 sowie der Werkzeugbacken 5, 34 lediglich mit dem vollständigen Durchlaufen des Arbeitshubs ermöglicht. Des Weiteren kann, insbesondere im Bereich der Verbindung des Kniehebels 47 mit dem Betätigungshebel 30, eine Einstelleinrichtung 56 vorhanden sein, über die eine (Fein-) Einstellung der Schließstellung der Werkzeugbacken 5, 34 möglich ist.

Fig. 2 kann entnommen werden, dass wesentliche Teile der Crimpzange 41 in Plattenbauweise hergestellt sind. Hierbei zeigt Fig. 2 eine Platte, mittels welcher der Zangenkopf 7 mit einer Deckplatte 8 sowie ein Teil des Handhebels 42 gebildet ist. Eine entsprechende Deckplatte auf der anderen Seite ist in Fig. 2 demontiert. Der Handhebel 54 mit dem Kniehebel 48 ist hier mit zwei parallelen Platten gebildet, zwischen denen einerseits der mit zwei unmittelbar aufeinander liegenden Platten gebildete Kniehebel 47 sowie der Betätigungshebel 30 aufgenommen ist. Auch die Werkzeugbacke 34 ist mit zwei beabstandeten Platten gebildet, welche sich auf beiden Seiten von dem Betätigungshebel 30 erstrecken. Hingegen ist vorzugsweise die Werkzeugbacke 5 als massives Bauelement ausgebildet, wobei dieses auch, wie in Fig. 2 ersichtlich ist, auf der Unterseite mit einem Schlitz oder einer Ausnehmung ausgestattet sein kann, in welchem oder welcher ein Steg eines Gesenks aufgenommen werden kann.

Für das Ausführungsbeispiel gemäß Fig. 2 erfolgt eine Beaufschlagung der Crimpzange 41 durch eine Feder 57 in Öffnungsrichtung. Für das dargestellte Ausführungsbeispiel ist ein Federfußpunkt der Feder 57 an einem von dem Werkzeugkopf 7 getragenen Bolzen 48 angelenkt, während der andere Federfußpunkt der Feder 57 an dem Betätigungshebel 30 angelenkt ist.

Ein entsprechender Aufbau kann auch für die Ausgestaltung eines Presswerkzeugs oder eines Schneidwerkzeugs bzw. einer Presszange oder einer Schneidzange gewählt werden.

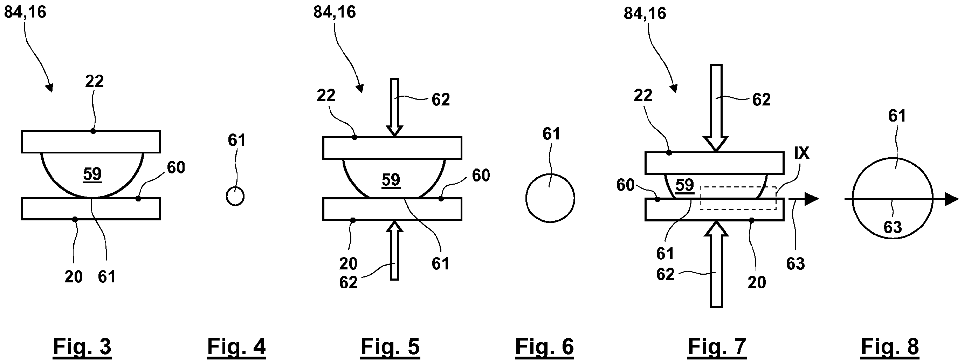

**Fig. 3** zeigt eine mögliche Ausgestaltung eines im Rahmen der Erfindung einsetzbaren Kraftsensors 16. Der Kraftsensor 16 verfügt über einen elastischen Sensorkörper 59, bei welchem es sich bspw. um einen Elastomerkörper handeln kann. Der elastische Sensorkörper 59 ist fest mit dem Fußpunkt 22 des Kraftsensors 16 verbunden. Der elastische Sensorkörper 59 ist ballig oder konvex in Richtung des Fußpunktes 20 ausgebildet. Der elastische Sensorkörper 59 kann eine Kalotte sein, halb- oder teilkugelförmig ausgebildet sein oder halb- oder teilzylindrisch ausgebildet sein, um lediglich einige nicht beschränkende Beispiele zu nennen. Der elastische Sensorkörper 59 bildet mit einer Sensorfläche 60 eine Kontaktfläche 61 aus, deren Geometrie von der Form des Sensorkörpers abhängig ist. Beispielsweise ist die Kontaktfläche kreisförmig, elliptisch oder rechteckig.

**Fig. 4** zeigt eine Draufsicht auf die Kontaktfläche. Ohne wirkende Arbeitskraft 25 ist die Kontaktfläche 61 sehr klein. Vorzugsweise ergibt sich diese lediglich infolge einer geringfügigen elastischen Verformung des elastischen Abstützelements 14 sowie des elastischen Sensorkörpers 59 infolge der Beaufschlagung durch die Feder 43.

**Fig. 5 bis 8** zeigen die veränderten Verhältnisse während des Durchlaufens des Arbeitshubs. Mit einer Vergrößerung der wirkenden Sensorkraft 62 vergrößert sich die Kontaktfläche 61 über eine Abhängigkeit, welche sich aus den Hebelverhältnissen sowie der Steifigkeit des elastischen Abstützelements 14 sowie des Kraftsensors 16, hier insbesondere des elastischen Sensorkörpers 59, ergibt. Für den Fachmann wird ersichtlich sein, dass sich je nach Geometrie des elastischen Sensorkörpers 59 und einer etwaigen Konturierung der Sensorfläche 60 auch Kontaktflächen 61 ergeben können, welche nicht kreisförmig sind wie dies in Fig. 4, 6 und 8 der Fall ist, sondern eine beliebige andere Geometrie aufweisen, bspw. eine elliptische Geometrie, eine rechteckige Geometrie für einen teilzylindrischen elastischen Sensorkörper 59 u. ä.

Über den Kraftsensor 16 erfolgt vorzugsweise eine Ermittlung der Sensorkraft 62 über eine Erfassung der Größe der Kontaktfläche 61. Dies kann, wie eingangs erläutert, bspw. durch die Messung eines Übergangswiderstands erfolgen, welcher von der Größe der Kontaktfläche 61 abhängig ist. Vorzugsweise findet hier eine Technologie Einsatz, wie diese in einem anderen Technologiebereich in der Druckschrift DE 102 28 185 A1 beschrieben worden ist:

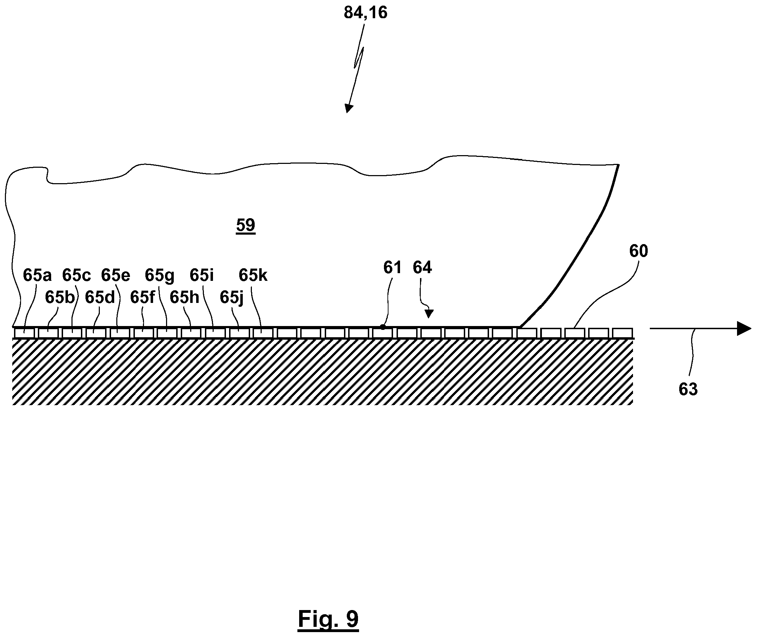

**Fig. 9** zeigt ein Detail IX des Kraftsensors gemäß Fig. 7 im Bereich der Kontaktfläche 61. Zu erkennen ist, dass die Sensorfläche 60 zumindest in eine Erstreckungsrichtung 63 eine Reihe 64 mit in gleichen oder variierenden Abständen angeordneten Schaltern oder Kontakten 65a, 65b, 65c, ... aufweist. Beispielsweise ist die Reihe 64 sowie die Erstreckungsrichtung 63 in Richtung eines Durchmessers der Kontaktfläche 61 oder einer Halbachse bspw. einer elliptischen Kontaktfläche 61 oder einer Erstreckungsrichtung 63 einer rechteckigen Kontaktfläche orientiert. Die Zahl der Schalter oder Kontakte 65, welche in Kontakt mit dem elastischen Sensorkörper 59 kommen, hängt ab von der Größe der Kontaktfläche 61 und damit auch von der Größe der Sensorkraft 62. Erfolgt elektronisch eine Erfassung der Zahl der von dem elastischen Sensorkörper 59 kontaktierten Schalter oder Kontakte 65, kann aus dieser Zahl auf die Sensorkraft 62 (und damit auf die Arbeitskraft 25) rückgeschlossen werden. Für den Fall, dass Schalter 65 zum Einsatz kommen, führt für an sich offene Schalter 65 der Kontakt des Sensorkörpers 59 mit den jeweiligen Schaltern 65 zum Schließen des Schalters, so dass über diesen ein Strom fließt, der ausgewertet werden kann zur Erkennung, dass dieser Schalter kontaktiert ist. Möglich ist aber auch, dass Kontakte 65 zum Einsatz kommen, welche dann von einem unter Umständen bestromten Sensorkörper 59 kontaktiert werden, so dass dann über den jeweiligen Kontakt 65 ein Strom fließen kann, welcher ausgewertet wird zur Erkennung, welcher und wie viele Kontakte 65 einen elektrischen Kontakt mit dem Sensorkörper 59 ausbilden.

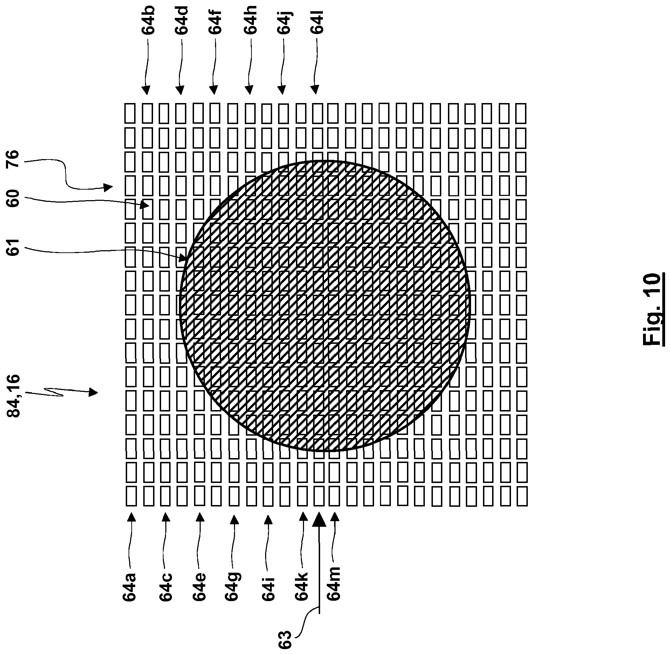

**Fig. 10** zeigt eine abgewandelte Ausführungsform mit einer Draufsicht auf die Kontaktfläche 61 sowie die Sensorfläche 60. Hier verfügt die Sensorfläche 60 nicht lediglich über eine Reihe 64 mit Schaltern oder Kontakten 65, sondern vielmehr über mehrere nebeneinander angeordnete Reihen 64a, 64b, 64c, ..., so dass hier die Schalter oder Kontakte 65 in der Art einer Matrix 76 angeordnet sind. Erfolgt hier eine entsprechende Auswertung der Zahl der Kontakte oder Schalter 65, welche von dem elastischen Sensorkörper 59 kontaktiert werden, korreliert diese Zahl unmittelbar mit der Fläche der Kontaktfläche 61.

(Zur Verdeutlichung wird darauf hingewiesen, dass für die Nutzung lediglich einer Reihe von Schaltern oder Kontakten 65 eine einzelne Reihe 64l in der Darstellung gemäß Fig. 10 verwendet wird, welche im Bereich des Durchmessers der sich ausbildenden Kontaktfläche 61 angeordnet ist, während die anderen in Fig. 10 dargestellten Reihen dann entfallen können.)

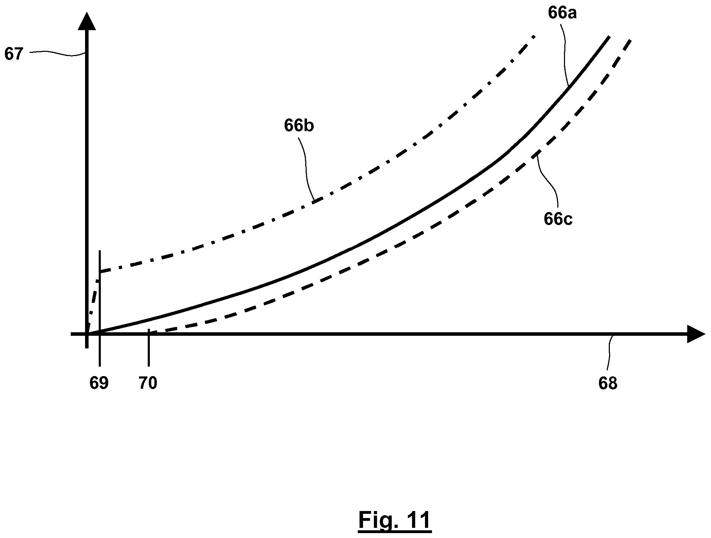

**Fig. 11** zeigt einen Verlauf 66 einer mittels des Kraftsensors 16 ermittelten Sensorkraft 67 über den Arbeitshub 68 des Werkzeugs 4. Hier zeigt der Verlauf 66a, der mit durchgezogener Linie dargestellt ist, einen idealen Verlauf. Hierbei kann die Sensorkraft 67 unter Berücksichtigung der Charakteristik der Verformung des elastischen Abstützelements 14 umgerechnet werden in die wirkende Arbeitskraft 55. Ebenfalls möglich ist, dass entsprechend der Charakteristik des Kraftsensors 16 oder des elastischen Sensorkörpers 59 sowie der Geometrie des elastischen Sensorkörpers 59 eine Umrechnung der Zahl der betätigten Kontakte oder Schalter 65 in die wirkende Sensorkraft 67 erfolgen. In jedem Fall kann über den Verlauf 66 über den Arbeitshub 68 eine Ermittlung der wirkenden Arbeitskraft 55 erfolgen.

Die Verläufe 66b, 66c zeigen die Sensorkraft 67 über den Arbeitshub 68 für einen nicht idealen Verlauf. So zeigt bspw. der Verlauf 66b einen Verlauf, für welchen infolge von Fertigungstoleranzen (bspw. des elastischen Abstützelements 14) der Kraftsensor 16 zu Beginn des Arbeitshubs beaufschlagt wird, ohne dass die parallele Beaufschlagung des elastischen Abstützelements 14 erfolgt. Somit erfolgt bis zu einem Arbeitshub 69 keine parallele Beaufschlagung des Abstützelements 14 und des Kraftsensors 16. Dies hat zur Folge, dass die von dem Kraftsensor 16 ermittelte Sensorkraft sehr steil ansteigt. Mit dem Erreichen des Arbeitshubs 69 wird dann aber auch das elastische Abstützelement 14 beaufschlagt, womit dann eine parallele Abstützung der Werkzeugbacke 5 sowohl über den Kraftsensor 16 als auch über das Abstützelement 14 erfolgt. Der Verlauf 66b hat somit grundsätzlich für Arbeitshübe größer als der Arbeitshub 69 einen Kurvenverlauf entsprechend dem idealen Verlauf 66a mit der Verschiebung, welche sich infolge des steilen Anstiegs bis zu dem Arbeitshub 69 ergibt.

Hingegen zeigt der Verlauf 66c die Entwicklung der Sensorkraft 67 für den Fall, dass, ebenfalls infolge von Fertigungstoleranzen, mit dem Beginn des Arbeitshubs zunächst nur das elastische Abstützelement 14 beaufschlagt wird, während bis zu einem Arbeitshub 70 noch keine Beaufschlagung des Kraftsensors 16 erfolgt. Mit hinreichender Verformung des Abstützelements 14 mit dem Erreichen des Arbeitshubs 70 erfolgt dann die kumulative Beaufschlagung des Abstützelements 14 und des Kraftsensors 16, so dass dann der Verlauf 66 grundsätzlich den Kurvenverlauf gemäß dem idealen Verlauf 66a hat, allerdings mit der Verschiebung, welche aus der Beaufschlagung des Kraftsensors 16 erst mit dem Arbeitshub 70 resultiert. Für andere Fehlerquellen als Fertigungstoleranzen des elastischen Abstützelements 14 ergeben sich entsprechende Verschiebungen.

Vorzugsweise verfügt erfindungsgemäß das Werkzeug 4 über eine Steuereinheit, mittels welcher eine Kalibrierung derart erfolgt, dass trotz der erläuterten Ungenauigkeiten, insbesondere Fertigungstoleranzen, nicht ideale Verläufe 66b, 66c einer erfassten Sensorkraft 67 so verschoben werden, dass diese dem idealen Verlauf 66a entsprechen oder diesem zumindest angenähert sind. Für eine Durchführung einer derartigen Kalibrierung gibt es unterschiedliche Möglichkeiten:
Möglich ist bspw., dass in das Werkzeug 4 ein Werkstück oder ein Prüfkörper eingelegt wird, welcher bei Betätigung des Werkzeugs 4 eine vorgegebene Arbeitskraft 25 (und damit eine vorgegebene Sensorkraft 67) erzeugt. Für ein Werkzeug 4 mit idealen Verlauf 66a ermittelt der Kraftsensor 16 mit der zugeordneten Steuereinheit tatsächlich die vorgegebene Sensorkraft, während für ein Werkzeug 4 mit dem Verlauf 66b eine zu hohe Sensorkraft ermittelt wird und für das Werkzeug 4 mit dem Verlauf 66c eine zu kleine Sensorkraft ermittelt wird. Es kann dann eine Korrektur mit der Addition eines Sensorkraft-Korrekturwerts bzw. der Subtraktion eines entsprechenden Sensorkraft-Korrekturwerts eine Verschiebung der Verläufe 66b, 66c in Richtung des idealen Verlaufs 66a erfolgen.

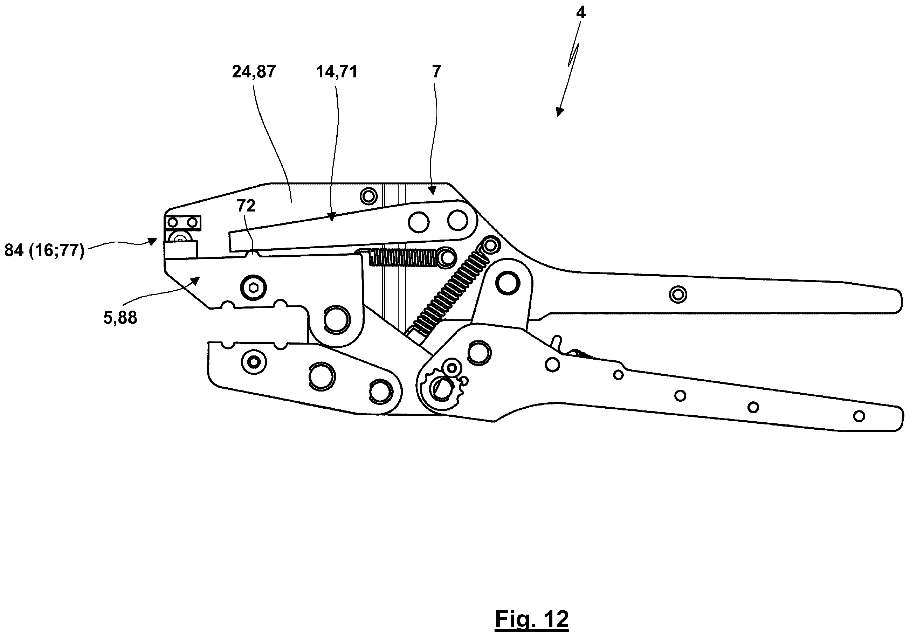

Während gemäß Fig. 2 das elastische Abstützelement 14 mit einem tonnenförmigen oder zylinderförmigen Elastomerkörper, insbesondere aus einem PU-Material gebildet war, zeigt **Fig. 12** eine Ausführungsform, bei welcher das elastische Abstützelement 14 als Blattfeder oder Biegebalken 71 ausgebildet ist. Ein Endbereich der Blattfeder oder des Biegebalkens 71 ist an dem Werkzeugkopf 7 oder den Deckplatten desselben, bspw. über zwei Befestigungsbolzen, fixiert, während an dem frei auskragenden Endbereich ein Fortsatz 72 der Werkzeugbacke 5 abgestützt ist.

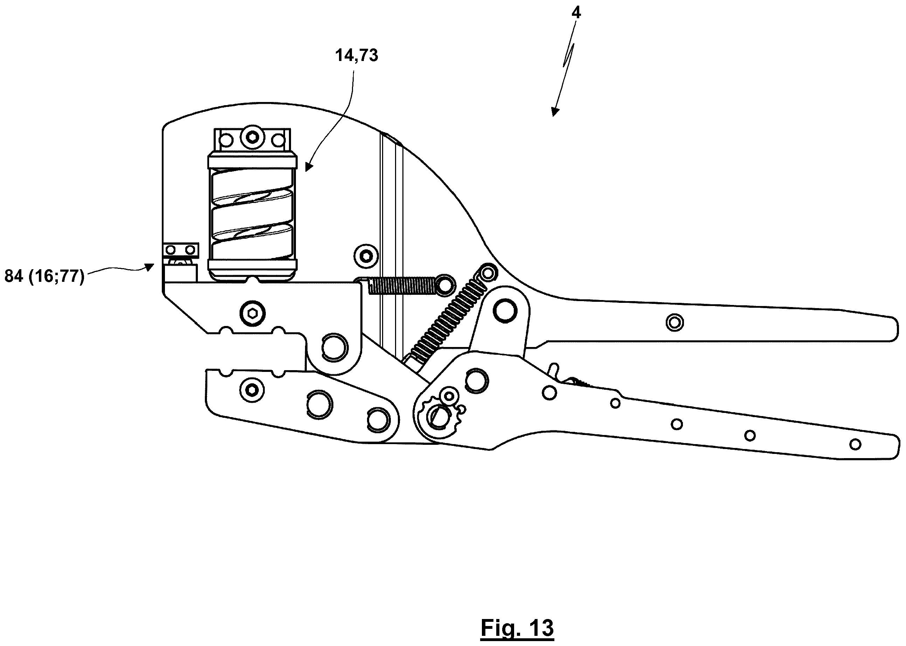

Für das in **Fig. 13** dargestellte Ausführungsbeispiel findet eine spiralförmige Druckfeder 73 für das elastische Abstützelement 14 Einsatz.

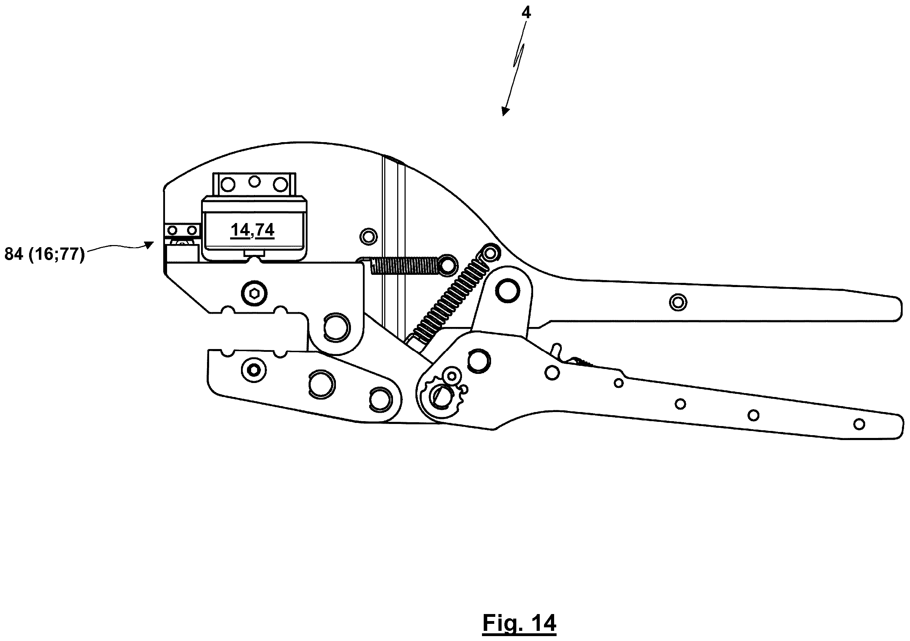

Möglich ist aber auch, dass gemäß in **Fig. 14** dargestellten Ausführungsbeispiel das elastische Abstützelement 14 als Gasdruckfeder 74 ausgebildet ist.

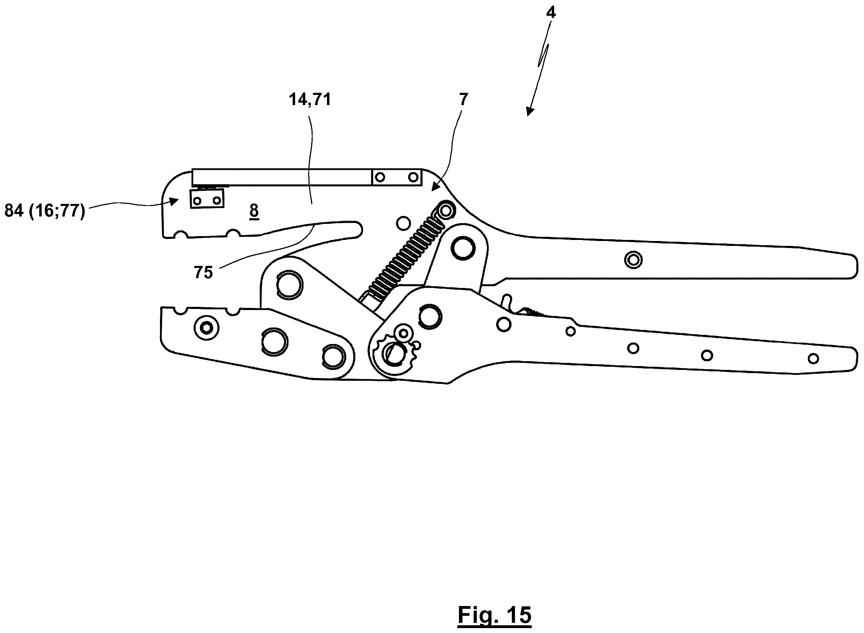

Um lediglich ein weiteres nicht beschränkendes Beispiel zu nennen, kann gemäß **Fig. 15** auch eine Deckplatte 8 des Werkzeugkopfs 7 gezielt mit einer Elastizität ausgebildet sein. In diesem Fall kann der Werkzeugkopf 7 oder die Deckplatte 8 selber das elastische Abstützelement 14 bilden. Für das in Fig. 15 dargestellte Ausführungsbeispiel verfügt die Deckplatte 8 über einen eine Schwächung der Deckplatte 8 darstellenden Einschnitt oder eine Aussparung, womit die Deckplatte 8 auch eine Art Blattfeder oder Biegebalken 71 bildet, deren freier Endbereich zur Abstützung eines Gesenks dienen kann.

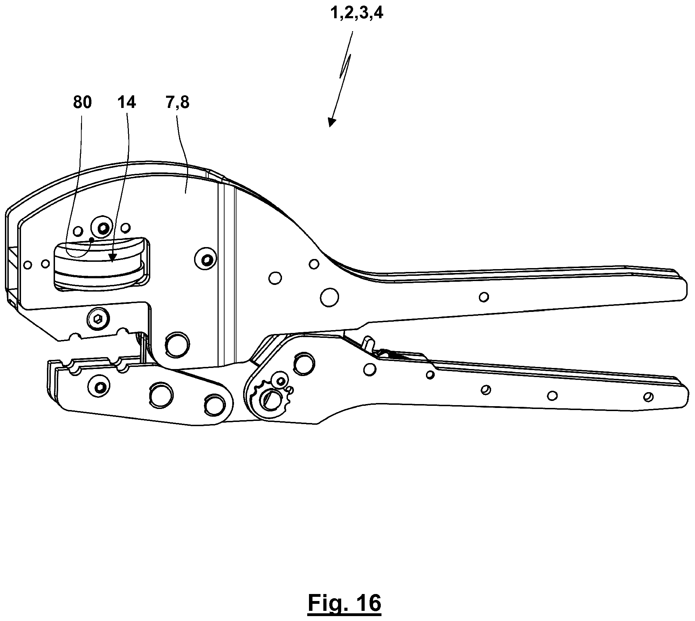

In **Fig. 16** ist zu erkennen, dass durchaus möglich ist, dass der Werkzeugkopf 7, hier die Deckplatten 8, über eine Ausnehmung 80 oder ein Fenster verfügen kann/können, in welche oder durch welche sich das Abstützelement 14 und/oder der Kraftsensor 16 oder der Wegsensor 77 erstrecken können/kann.

Mittels einer Begrenzungseinrichtung 81 kann eine Begrenzung der Bewegung der Werkzeugbacke 5 entlang des Messfreiheitsgrads 26 oder der auf den Kraftsensor 16 wirkenden Sensorkraft erfolgen.

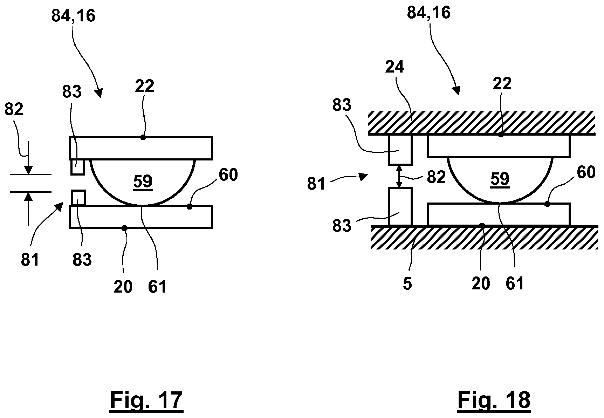

Für das Ausführungsbeispiel gemäß **Fig. 17** ist die Begrenzungseinrichtung 81 integraler Bestandteil des Kraftsensors 16. Die Begrenzungseinrichtung 81 gibt einen maximalen Sensorhub 82 vor. Die Begrenzungseinrichtung 81 weist mindestens einen Anschlag 83 auf, welcher mit der Erreichung des maximalen Sensorhubs 82 eine weitere Sensorbewegung des Kraftsensors 16 (und auch eine weitere Bewegung der Werkzeugbacke 5) blockiert.

Für das Ausführungsbeispiel gemäß **Fig. 18** ist die Begrenzungseinrichtung 81 nicht integraler Bestandteil des Kraftsensors 16. Vielmehr wirkt hier die Begrenzungseinrichtung 81 unmittelbar zwischen der Werkzeugbacke 5 und dem Abstützkörper 24.

Eine entsprechende Begrenzungseinrichtung 81 kann auch Einsatz finden für die Ausbildung des Sensors 84 als Wegsensor 77 , wenn der Wegsensor 77 lediglich einen begrenzten Messbereich hat.

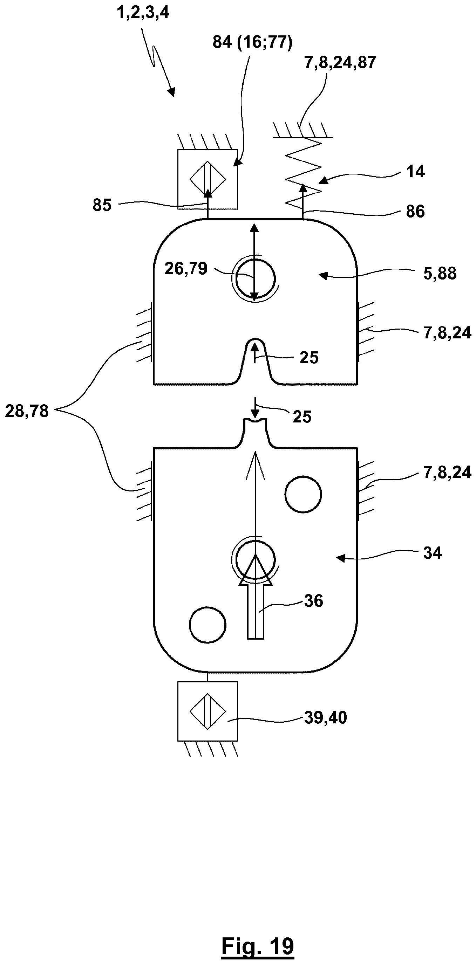

**Fig. 19** zeigt eine Prinzipskizze eines Werkzeugs 4, bei welchem die Werkzeugbacken 5, 34 über eine Linearführung 78 für eine translatorische Relativbewegung geführt sind. Beispielsweise ist ein derartiges Werkzeug 4 entsprechend einer Crimpzange mit der Kennzeichnung CS 10 oder CS 30 der Anmelderin ausgebildet. Hierbei wird die Werkzeugbacke 34 über einen Antrieb, insbesondere Handhebel mit einem zugeordneten Antriebsmechanismus, mit einer Betätigungskraft 36 beaufschlagt und entlang der Linearführung 78 in Richtung der Werkzeugbacke 5 bewegt. Auf der der Werkzeugbacke 34 abgewandten Seite ist die Werkzeugbacke 5 über einen Sensor 84, insbesondere einen Kraftsensor 16 sowie in mechanischer Parallelschaltung über ein Abstützelement 14 angebunden. Die Linearführung 78 gibt dabei einen linearen Messfreiheitsgrad 79 vor. Je nach an der Werkzeugbacke 5 wirkenden Arbeitskraft 25 erfolgt unter Beaufschlagung sowohl des Abstützelements 14 als auch des Kraftsensors 16 eine Bewegung der Werkzeugbacke 5 entlang des Messfreiheitsgrads 79. Auch hier kann optional eine zusätzliche Erfassung eines Wegs der Werkzeugbacke 34 (oder eines hiermit antriebsverbundenen Antriebselements) über einen Wegsensor 40 erfolgen, um mit dem Kraftsensor 16 und dem Wegsensor 40 eine Kraft-Weg-Kurve zu ermitteln.

Vorzugsweise ist das erfindungsgemäße Press-, Crimp- oder Schneidwerkzeug als manuell über zwei Handhebel betätigtes Press-, Crimp- oder Schneidwerkzeug ausgebildet.

Im Rahmen der Erfindung sind der Sensor 84 und das elastische Abstützelement 14 in mechanischer Parallelschaltung zwischen zwei Bauelementen 87, 88 angeordnet, die sich im Kraftfluss des Press-, Crimp- oder Schneidwerkzeugs 1, 2, 3 befinden. Hierbei sind die beiden Bauelemente 87, 88 in mechanischer Reihenschaltung angeordnet. Möglich ist, dass die beiden Bauelemente 87, 88 mit der Arbeitskraft des Press-, Crimp- oder Schneidwerkzeugs 1, 2, 3 beaufschlagt sind. Möglich ist aber auch, dass die beiden Bauelemente 87, 88 lediglich mit einem definierten Anteil der Arbeitskraft des Press-, Crimp- oder Schneidwerkzeugs 1, 2, 3 beaufschlagt sind. Die Bauelemente 87, 88 können in der Antriebskinematik des Press-, Crimp- oder Schneidwerkzeugs 1, 2, 3 an beliebiger Stelle zwischen einem Antrieb, insbesondere Handhebeln, und einer Werkzeugbacke 5 (einschließlich derselben) angeordnet sein, wobei dann auch die die Bauelemente 87, 88 beaufschlagende Kraft noch gegenüber der von dem Antrieb erzeugten und/oder der an der Werkzeugbacke 5 wirkenden Kraft infolge der Antriebskinematik übersetzt oder untersetzt sein kann.

Die beiden Bauelemente 87, 88 können ausschließlich über mindestens ein elastisches Abstützelement 14 und den Sensor 84 miteinander gekoppelt sein. Vorzugsweise sind diese aber ergänzend über eine Führung 28 miteinander gekoppelt, bei welcher es sich beispielsweise um eine Linearführung oder ein Schwenklager handelt.

Die Bauelemente 87, 88 können jeweils einstückig oder mehrstückig ausgebildet sein. Für eine mehrstückige Ausbildung können die Teile (unmittelbar oder mittelbar) starr miteinander verbunden sein. Grundsätzlich möglich ist hierbei, dass ein Bauelement 78, 88 aus mindestens zwei Teilen besteht, wobei dann an einem Teil das elastische Abstützelement 14 und an einem anderen Teil der Sensor 84 abgestützt ist. In diesem Fall ist sogar auch möglich, dass die beiden Teile über den Arbeitshub nicht starr miteinander (unmittelbar oder mittelbar) verbunden sind, sondern diese eine definiert von dem Arbeitshub abhängige, über die Antriebskinematik vorgegebene Relativbewegung ausführen.

Für die hier dargestellten Ausführungsformen sind die Bauelemente 87, 88 als Werkzeugbacke 5 und als Abstützkörper 24 ausgebildet, ohne dass die Erfindung hierauf beschränkt ist.

Der Sensor 84 und das elastische Abstützelement 14 erfahren miteinander korrelierende Auslenkungen 85, 86. Im Fall einer Führung der Bauelemente 87, 88 relativ zueinander mittels eines Schwenklagers 29 korrelieren die Auslenkungen 85, 86 entsprechend den Abständen 13, 15 von der Schwenkachse 11 des Schwenklagers 29 (vgl. Fig. 1). Hingegen korrelieren die Auslenkungen 85, 86 im Fall einer Führung der Bauelemente 87, 88 relativ zueinander mit einer Linearführung 78, indem diese gleich groß sind (vgl. Fig. 19).

Ohne dass dies zwingend der Fall ist, kann das die Führung 28 bildende Schwenklager 6 multifunktional sein, indem dieses auch das Schwenklager 29 für ein weiteres Bauelement, insbesondere die andere Werkzeugbacke 34 oder einen Betätigungshebel 30, bildet, wobei das weitere Bauelement relativ zu der Werkzeugbacke 5, welche das Abstützelement 14 abstützt, verschwenkbar ist.

Bei der in den Figuren 3 bis 10 dargestellten Ausführungsform des Sensors 84 handelt es sich lediglich um ein Beispiel eines im Rahmen der Erfindung einsetzbaren Kraftsensors 16. Ohne dass eine Beschränkung der Erfindung auf die folgenden weiteren Ausführungsbeispiele eines Sensors 84 erfolgen soll, können insbesondere Sensoren 84 entsprechend den folgenden Wirkprinzipien Einsatz finden:
- Möglich ist, dass ein kapazitiver Wegsensor eingesetzt wird. Möglich ist hierbei, dass in einem kapazitiven Wegsensor eine Relativbewegung von zwei Platinen erfasst wird. In diesem Fall können die Platinen mit einem oder mehreren Paaren von Elektrodenreihen ausgestatteten sein, wobei die Elektrodenreihen jeweils eine Vielzahl von mit gleichen Abständen beabstandeten und gemeinsam elektrisch beaufschlagten Elektroden aufweisen. Die Elektrodenreihen werden mit einem Prüfsignal beaufschlagt und eine erfasste Übertragungsfunktion zwischen den Elektrodenreihen, welche von der relativen Lage der Platine und damit der zugeordneten Paare von Elektrodenreihen abhängig ist, wird ausgewertet, um den Weg, der der Relativbewegung der Platinen entspricht, zu erfassen. Eine mögliche Ausführungsform eines derartigen kapazitiven Wegsensors ist beispielsweise in der Druckschrift US 4,879,508 A beschrieben, deren Offenbarung hinsichtlich der technischen Ausgestaltung eines kapazitiven Wegsensors zum Gegenstand der vorliegenden Patentanmeldung gemacht wird.
- Möglich ist, dass als Wegsensor ein Potentiometer oder ein Folien-Potentiometer Einsatz findet. Möglich ist beispielsweise, dass Folien-Potentiometer verwendet werden, wie diese auf der Website www.metallux.de beschrieben sind und mit der Kennzeichnung "Foliensensor linear MTP-L", "Foliensensor linear MTP-LX" oder "Foliensensor Wegerfassung kontaktlos magnetisch MMP" angeboten werden.
- Möglich ist des Weiteren, dass ein optischer Wegsensor eingesetzt werden kann. Ein derartiger optischer Wegsensor kann beispielsweise Glasmessstäbe aufweisen, welche auch eine BCD-Kodierung aufweisen können. Beispiele einsetzbarer optischer Wegsensoren sind beispielsweise auf der Website www.keyence.de als "Fotoelektrische Sensoren" oder "Faseroptische Sensoren" beschrieben und angeboten, vgl. auch die Patentanmeldungen und Patente des Unternehmens Keyence Corporation, Osaka, Japan, welche in der IPC-Klasse G01D005 einklassifiziert sind.
- Möglich ist auch, dass ein induktiver Wegsensor Einsatz findet.
- Möglich ist auch die Verwendung ein mechanischen Wegsensors, bei welchem beispielsweise mit dem Arbeitshub ein Zeiger des Wegsensors mitbewegt wird, welcher am Ende des Arbeitshubs bei der erreichten Stellung stehenbleibt, so dass der Maximalwert der Arbeitskraft angezeigt werden kann. Möglich ist auch, dass der mechanische Wegsensor mit dem Überschreiten eines Schwellwertes einen mechanischen Zähler betätigt, so dass der mechanische Zähler anzeigen kann, wie viel Arbeitshübe ein Werkzeug durchlaufen hat.
- Möglich ist des Weiteren, dass ein magnetischer Sensor oder ein Hall-Sensor Einsatz findet. Diese können in beliebiger Ausgestaltung Einsatz finden. Möglich ist, dass lediglich ein Abstand eines Magnetes von einem Sensor für die Erfassung des Magnetfelds verändert wird, so dass über die erfasste Veränderung des Magnetfelds ein Weg erfasst werden kann. Möglich ist für eine weitere Ausführungsform auch, dass ein Magnetstreifen über seine Längserstreckung mit einem wechselnden permanenten Magnetfeld ausgestattet ist. Der Magnetstreifen wird dann an einem Empfänger für das Magnetfeld vorbeibewegt. Möglichkeiten derartiger Wegsensoren sind beispielsweise der Website www.ams.com/eng/products/magnetic-position-sensors unter der Rubrik "Linear position" zu entnehmen. Beispielsweise kann ein Hall-Sensor des Typs AS5510, wie dieser in der genannten Rubrik angeboten wird, verwendet werden.
- Möglich ist auch, dass ein Wegsensor eingesetzt wird, bei welchem ein Abschattungselement zwischen einem Lichtsender und einem Lichtempfänger, beispielsweise einen Fototransistor und eine LED, bewegt wird, wobei je nach Auslenkung des Wegsensors der Strahlengang von der Lichtquelle zu dem Lichtempfänger mehr oder weniger abgeschattet wird. Bei dem Abschattungselement kann es sich um einen Schieber, ein Abschattungsfenster o. ö. handeln. Möglich ist auch, dass beispielsweise zwischen Lichtsender und Lichtempfänger ein Schaumstoff oder ein anderweitiges teillichtdurchlässiges Material angeordnet ist, wobei der Schaumstoff oder das teillichtdurchlässige Material je nach Auslenkung des Wegsensors mehr oder weniger zusammengedrückt werden kann, womit sich dessen Lichtdurchlässigkeit verändert.
- Möglich ist, dass ein laserbasierter Wegsensor verwendet wird.

Möglich ist, dass ein Sensor Einsatz findet, in welchem eine Digitalisierung des Messwegs mit mindestens 100 Stufen erfolgt. Möglich ist aber auch eine Digitalisierung mit mehr als 200, 300, 500 oder sogar 1.000 Digitalisierungsstufen.

Vorzugsweise arbeitet des Messsensor mit einer Betriebsspannung, die größer ist als 1 V, 2 V, 3 V, wobei die Betriebsspannung beispielsweise im Bereich zwischen 3 und 5 V liegen kann. Üblicherweise findet für gemäß dem Stand der Technik eingesetzte Sensoren eine u. U. um eine Größenordnung kleinere Betriebsspannung Einsatz, was zu dem Nachteil führt, dass Schwankungen der elektrischen Leistungsversorgung, insbesondere einer Batterie, mit welcher das Press-, Crimp- oder Schneidwerkzeug ausgestattet werden muss, für die aus dem Stand der Technik bekannten Sensoren zu einem größeren Messfehlerfinden. Für den erfindungsgemäßen Sensor kann das Nutzsignal, also ein in Abhängigkeit von der maximalen Auslenkung erzeugtes Messsignal oder eine Änderung eines Messsignals mehr als 10 %, mehr als 20 % oder sogar mehr als 30 % des Versorgungssignals betragen.

Für die dargestellten Ausführungsbeispiele findet immer ein Sensor 84 Einsatz, welcher die Kraft oder den Weg in eine lineare oder weitestgehend lineare Messrichtung erfasst. Im Rahmen der Erfindung kann aber durchaus auch ein Sensor 84 in Ausbildung als Rotationssensor eingesetzt werden, welcher beispielsweise einen Drehwinkel eines Bauelements 88 oder der Werkzeugbacke 5 erfasst. Ebenfalls möglich ist, dass der Sensor 84 ein Sensormoment erfasst, mit welchem eine Abstützung des Bauelements 88 oder der Werkzeugbacke 5 erfolgt. Auch in diesen Fällen erfolgt eine Parallelschaltung des elastischen Abstützelements 14 mit dem Sensor 84, da diese miteinander korrelierende, über die Geometrie vorgegebene Auslenkungen erfahren, aber mit unterschiedlichen Kräften bzw. Momenten beaufschlagt werden.

Im Rahmen der Erfindung wird unter ein erfindungsgemäßes Presswerkzeug auch ein Werkzeug verwendet, mittels dessen die erforderlichen Presskräfte für ein Durchsetzfügen, Clinchen oder Toxen eines Werkstücks erzeugt werden.

Der Sensor 84 kann in Messrichtung eine beliebige Erstreckung aufweisen. Vorzugsweise verfügt der Sensor 84 in Messrichtung über eine Erstreckung von weniger als 1,5 cm, 1,2 cm, 1,0 cm, 0,8 cm oder 0,5 cm, wobei trotz dieser geringen Erstreckung die genannten erfindungsgemäßen maximalen Auslenkungen 85 des Sensors 84 gewährleistet werden können. Möglich ist auch, dass die maximale Auslenkung 85 des Sensors 84 mehr als 5 %, mehr als 10 %, mehr als 15 %, mehr als 20 % oder sogar mehr als 30 % der Erstreckung des Sensors 84 in Messrichtung beträgt.

### BEZUGSZEICHENLISTE

1 Presswerkzeug
2 Crimpwerkzeug
3 Schneidwerkzeug
4 Werkzeug
5 Werkzeugbacke
6 Schwenklager
7 Werkzeugkopf
8 Deckplatte
9 Lagerauge
10 Schwenkbolzen
11 Schwenkachse
12 Gesenk- oder Werkstückaufnahme
13 Hebelarm, Abstand
14 elastisches Abstützelement
15 Hebelarm, Abstand
16 Kraftsensor
17 Erstreckung
18 Erstreckung
19 Zwischenraum
20 Fußpunkt
21 Fußpunkt
22 Fußpunkt
23 Fußpunkt
24 Abstützkörper
25 Arbeitskraft
26 Messfreiheitsgrad
27 Schwenk-Messfreiheitsgrad
28 Führung
29 Schwenklager
30 Betätigungshebel
31 Lagerauge
32 Befestigungsbolzen
33 Befestigungsbolzen
34 Werkzeugbacke
35 Anlenkung
36 Betätigungskraft
37 Ausnehmung
38 Befestigungsschraube
39 Sensor
40 Wegsensor
41 Crimpzange
42 Handhebel
43 Feder
44 Bolzen
45 Antriebsmechanismus
46 Kniehebeltrieb
47 Kniehebel
48 Kniehebel
49 Kniegelenk
50 Schwenklager
51 Schwenkbolzen
52 Schwenklager
53 Schwenkbolzen
54 Handhebel
55 Zwangsgesperre
56 Einstelleinrichtung
57 Feder
58 Bolzen
59 elastischer Sensorkörper
60 Sensorfläche
61 Kontaktfläche
62 Sensorkraft
63 Erstreckungsrichtung
64 Reihe
65 Schalter oder Kontakt
66 Verlauf
67 Sensorkraft
68 Arbeitshub
69 Arbeitshub
70 Arbeitshub
71 Blattfeder, Biegebalken
72 Fortsatz
73 Druckfeder
74 Gasdruckfeder
75 Einschnitt, Aussparung
76 Matrix
77 Wegsensor
78 Linearführung
79 translatorischer Messfreiheitsgrad
80 Ausnehmung
81 Begrenzungseinrichtung
82 maximaler Sensorhub
83 Anschlag
84 Sensor
85 Auslenkung
86 Auslenkung
87 Bauelement
88 Bauelement

## Patentansprüche

1. Press-, Crimp- oder Schneidwerkzeug (1; 2; 3) mit zwei im Kraftfluss des Press-, Crimp-oder Schneidwerkzeugs (1; 2; 3) angeordneten Bauelementen (87, 88), wobei zwischen den Bauelementen (87, 88) ein elastisches Abstützelement (14) und ein Sensor (84) in mechanischer Parallelschaltung angeordnet sind, so dass der Sensor (84) und das elastische Abstützelement (14) infolge einer wirkenden Arbeitskraft miteinander korrelierende Auslenkungen (85, 86) erfahren, wobei die Bauelemente (87, 88), zwischen denen das elastische Abstützelement (14) und der Sensor (84) angeordnet sind, eine Werkzeugbacke (5) und ein Abstützkörper (24) sind, **dadurch gekennzeichnet, dass** die Steifigkeit des elastischen Abstützelements (14) so dimensioniert ist, dass bei der maximalen wirkenden Arbeitskraft des Press-, Crimp- oder Schneidwerkzeugs (1; 2; 3), die sich aus der maximalen von einem Antrieb des Press-, Crimp- oder Schneidwerkzeugs (1; 2; 3) erzeugbaren Antriebskraft oder der über einen Handhebel aufgebrachten maximalen Handkraft in Höhe von 250 N und dem Übersetzungsverhältnis einer in dem Press-, Crimp- oder Schneidwerkzeug (1; 2; 3) genutzten Antriebskinematik ergibt, der Sensor (84) eine maximale Auslenkung erfährt, welche mindestens 0,05 mm oder mindestens 1° beträgt.

2. Press-, Crimp- oder Schneidwerkzeug (1; 2; 3) nach Anspruch 1, **dadurch gekennzeichnet, dass** die Werkzeugbacke (5) über eine Führung (28) mit einem verbleibenden Messfreiheitsgrad (26) an dem Abstützkörper (24) abgestützt ist, wobei
a) die Führung (28) eine Linearführung (78) ist und der verbleibende Messfreiheitsgrad (26) ein translatorischer Messfreiheitsgrad (79) der Werkzeugbacke (5) relativ zu dem Abstützkörper (24) ist oder
b) die Führung (28) ein Schwenklager (6) ist und der verbleibende Messfreiheitsgrad (26) ein Schwenk-Messfreiheitsgrad (27) der Werkzeugbacke (5) relativ zu dem Abstützkörper (24) ist.

3. Press-, Crimp- oder Schneidwerkzeug (1; 2; 3) nach Anspruch 1 oder 2, **dadurch gekennzeichnet, dass** die Werkzeugbacke (5) lose an dem Sensor (16) und/oder dem Abstützelement (14) anliegt.

4. Press-, Crimp- oder Schneidwerkzeug (1; 2; 3) nach einem der vorhergehenden Ansprüche, **dadurch gekennzeichnet, dass** die Werkzeugbacke (5), der Sensor (84) und/oder das Abstützelement (14) über eine Feder (43) in Richtung des Messfreiheitsgrades (26) beaufschlagt ist/sind.

5. Press-, Crimp- oder Schneidwerkzeug (1; 2; 3) nach einem der vorhergehenden Ansprüche, **dadurch gekennzeichnet, dass** das elastische Abstützelement (14)
a) einen Elastomerkörper aufweist oder
b) einen metallischen Federkörper aufweist.

6. Press-, Crimp- oder Schneidwerkzeug (1; 2; 3) nach einem der vorhergehenden Ansprüche, **dadurch gekennzeichnet, dass**
a) das Press-, Crimp- oder Schneidwerkzeug (1; 2; 3) eine weitere Werkzeugbacke (34) und einen über einen Arbeitshub nicht bewegbaren Werkzeugkopf (7) aufweist, gegenüber dem beide Werkzeugbacken (5, 34) über die Führung (28) geführt sind, und
b) das Abstützelement (14) und/oder der Sensor (16) in dem Kraftfluss zwischen dem Werkzeugkopf (7) und der zugeordneten Werkzeugbacke (5) angeordnet sind.

7. Press-, Crimp- oder Schneidwerkzeug (1; 2; 3) nach Anspruch 6, **dadurch gekennzeichnet, dass** der Werkzeugkopf (5) mindestens eine Deckplatte (8) aufweist, welche die Führung (28) trägt und an welcher das Abstützelement (14) und/oder der Sensor (84) abgestützt ist/sind.

8. Press-, Crimp- oder Schneidwerkzeug (1; 2; 3) nach Anspruch 7, **dadurch gekennzeichnet, dass** mindestens eine Deckplatte (8) eine Ausnehmung (80) aufweist, in welche oder durch welche sich das Abstützelement (14) und/oder der Sensor (84) erstrecken/erstreckt.

9. Press-, Crimp- oder Schneidwerkzeug (1; 2; 3) nach einem der vorhergehenden Ansprüche, **dadurch gekennzeichnet, dass** der Sensor (84) ein Wegsensor (77) ist.

10. Press-, Crimp- oder Schneidwerkzeug (1; 2; 3) nach einem der Ansprüche 1 bis 8, **dadurch gekennzeichnet, dass** der Sensor (84) ein Kraftsensor (16) ist.

11. Press-, Crimp- oder Schneidwerkzeug (1; 2; 3) nach Anspruch 10, **dadurch gekennzeichnet, dass** eine Begrenzungseinrichtung (81) vorhanden ist, mittels welcher die auf den Kraftsensor (16) wirkende Sensorkraft begrenzt wird.

12. Press-, Crimp- oder Schneidwerkzeug (1; 2; 3) nach Anspruch 10 oder 11, **dadurch gekennzeichnet, dass**
a) der Kraftsensor (16) einen elastischen Sensorkörper (59) aufweist,
b) der Sensorkörper (59) eine Kontaktfläche (61) mit einer Sensorfläche (60) des Kraftsensors (16) ausbildet,
c) die Größe der Kontaktfläche (61) von der auf den Kraftsensor (16) wirkenden Sensorkraft abhängig ist und
d) der Kraftsensor (16) oder eine zugeordnete elektronische Steuereinheit die Größe der Kontaktfläche (61) ermittelt und die ermittelte Größe der Kontaktfläche (61) in ein Kraftmesssignal umwandelt.

13. Press-, Crimp- oder Schneidwerkzeug (1; 2; 3) nach Anspruch 12, **dadurch gekennzeichnet, dass** die Sensorfläche (60) des Kraftsensors (16) als Reihe (64) oder Matrix (76) mit Kontakten oder Schaltern (65) ausgebildet ist.

14. Press-, Crimp- oder Schneidwerkzeug (1; 2; 3) nach Anspruch 12 oder 13, **dadurch gekennzeichnet, dass** die Größe der Kontaktfläche (61)
a) über die Fläche der Kontaktfläche (61) oder
b) über eine Erstreckung (63) der Kontaktfläche (61) in mindestens eine repräsentative Erstreckungsrichtung
erfasst wird.

15. Press-, Crimp- oder Schneidwerkzeug (1; 2; 3) nach einem der vorhergehenden Ansprüche, **dadurch gekennzeichnet, dass** das Press-, Crimp- oder Schneidwerkzeug (1; 2; 3) eine elektronische Steuereinheit zur Auswertung des oder eines Messsignals des Sensors (84) aufweist.

16. Press-, Crimp- oder Schneidwerkzeug (1; 2; 3) nach Anspruch 15, **dadurch gekennzeichnet, dass** die elektronische Steuereinheit mit Steuerlogik ausgestattet ist, welche aus einem mit der oder einer Größe der oder einer Kontaktfläche (61) korrelierenden elektrischen Kontaktflächensignal unter Berücksichtigung
a) eines Kalibrierfaktors, einer Kalibrierkurve oder eines Kennfeldes,
b) einer Abhängigkeit der Größe der Kontaktfläche (61) von der auf den Kraftsensor (16) wirkenden Sensorkraft,
c) eines oder des Hebelarms (15) der oder einer Sensorkraft,
d) einer Federcharakteristik des elastischen Abstützelements (14) und/oder
e) eines oder des Hebelarms (13) der Abstützkraft
Kraftmesssignal ermittelt.

17. Press-, Crimp- oder Schneidwerkzeug (1; 2; 3) nach Anspruch 15 oder 16, **dadurch gekennzeichnet, dass** die elektronische Steuereinheit mit Steuerlogik ausgestattet ist, welche eine Kalibrierung des Press-, Crimp- oder Schneidwerkzeugs (1; 2; 3) für Bearbeitungsvorgänge ermöglicht, indem diese zur Ausführung der folgenden Schritte ausgebildet ist:
a) Initiierung einer Durchführung eines Kalibrier-Arbeitshubes oder mehrerer Kalibrier-Arbeitshübe,
b) Erfassung des Messsignals des Sensors (84) während mindestens eines Kalibrier-Arbeitshubes,
c) Ermittlung repräsentativer Daten, eines Kalibrierfaktors, einer Kalibrierkurve oder eines Kennfeldes oder eines Offsets aus mindestens einem Messsignal des Sensors (84) und/oder repräsentativer Schwankungen aus mehreren während mehrerer Kalibrier-Arbeitshübe aufgenommener Messsignale des Sensors (84),
d) Verwendung der repräsentativen Daten, des Kalibrierfaktors, der Kalibrierkurve, des Kennfeldes und/oder der repräsentativen Schwankungen für eine Beurteilung der Qualität von Bearbeitungsvorgängen mit dem Press-, Crimp- oder Schneidwerkzeug (1; 2; 3) nach Abschluss der Kalibrierung.

18. Werkzeuggruppe mit mindestens einem ersten Press-, Crimp- oder Schneidwerkzeug (1; 2; 3) und mindestens einem zweiten Press-, Crimp- oder Schneidwerkzeug (1; 2; 3), wobei das erste Press-, Crimp- oder Schneidwerkzeug (1; 2; 3) und das zweite Press-, Crimp- oder Schneidwerkzeug (1; 2; 3)
a) nach mindestens einem der vorhergehenden Ansprüche ausgebildet sind und
b) Press-, Crimp- oder Schneidwerkzeuge unterschiedlicher Typen sind und/oder für unterschiedliche maximale Arbeitskräfte bestimmt sind,
**dadurch gekennzeichnet, dass** das erste Press-, Crimp- oder Schneidwerkzeug (1; 2; 3) und das zweite Press-, Crimp- oder Schneidwerkzeug (1; 2; 3) gleiche Sensoren (84), aber unterschiedliche Abstützelemente (14) aufweisen.

## Claims

1. Pressing, crimping or cutting tool (1; 2; 3) comprising two components (87, 88) arranged in the force flow of the pressing, crimping or cutting tool (1; 2; 3), an elastic supporting element (14) and a sensor (84) being arranged in mechanical parallel arrangement between the components (87, 88) so that the sensor (84) and the elastic supporting element (14) are biased with correlating deflections (85, 86) due to applied working force, the components (87, 88) between which the elastic supporting element (14) and the sensor (84) are arranged being a tool jaw (5) and a supporting body (24), **characterised in that** the stiffness of the elastic supporting element (14) is dimensioned such that for the maximum applicable working force of the pressing, crimping or cutting tool (1; 2; 3) which results from the maximum driving force produced by a drive of the pressing, crimping or cutting tool (1; 2; 3) or from a maximum hand force of 250 N applied via a hand lever and the transmission ratio of a drive kinematic used in the pressing, crimping or cutting tool, the sensor (84) is biased with a maximum deflection which is at least 0.05 mm or at least 1°.

2. Pressing, crimping or cutting tool (1; 2; 3) of claim 1, **characterised in that** the tool jaw (5) is supported by a guiding device (28) on the supporting body (24) with one remaining measurement degree of freedom (26),
a) the guiding device (28) being a linear guide (78) and the remaining measurement degree of freedom (26) being a translational measurement degree of freedom (79) of the tool jaw (5) relative to the supporting body (24) or
b) the guiding device (28) being a pivot joint (6) and the remaining measurement degree of freedom (26) being a pivoting measurement degree of freedom (27) of the tool jaw (5) relative to the supporting body (24).

3. Pressing, crimping or cutting tool (1; 2; 3) of claim 1 or 2, **characterised in that** the tool jaw (5) loosely contacts the sensor (16) and/or the supporting element (14).

4. Pressing, crimping or cutting tool (1; 2; 3) of one of the preceding claims, **characterised in that** the tool jaw (5), the sensor (84) and/or the supporting element (14) are/is biased by a spring (43) in the direction of the measurement degree of freedom (26).

5. Pressing, crimping or cutting tool (1; 2; 3) of one of the preceding claims, **characterised in that** the elastic supporting element (14)
a) comprises an elastomeric body or
b) comprises a metallic spring body.

6. Pressing, crimping or cutting tool (1; 2; 3) of one of the preceding claims, **characterised in that**
a) the pressing, crimping or cutting tool (1; 2; 3) comprises another tool jaw (34) and a tool head (7) which is not moved over the working stroke, both tool jaws (5, 34) being guided by the guiding device (28) relative to the tool head (7) and
b) the supporting element (14) and/or the sensor (16) are/is arranged in the force flow between the tool head (7) and the associated tool jaw (5).

7. Pressing, crimping or cutting tool (1; 2; 3) of claim 6, **characterised in that** the tool head (5) comprises at least one cover plate (8) which carries the guiding device (28) and on which the supporting element (14) and/or the sensor (84) are/is supported.

8. Pressing, crimping or cutting tool (1; 2; 3) of claim 7, **characterised in that** at least one cover plate (8) comprises a recess (80) in which or through which the supporting element (14) and/or the sensor (84) extend/extends.

9. Pressing, crimping or cutting tool (1; 2; 3) of one of the preceding claims, **characterised in that** the sensor (84) is a displacement sensor (77).

10. Pressing, crimping or cutting tool (1; 2; 3) of one of claims 1 to 8, **characterised in that** the sensor (84) is a force sensor (16).

11. Pressing, crimping or cutting tool (1; 2; 3) of claim 10, **characterised in that** a limiting device (81) is provided which limits the sensor force biasing the force sensor (16).

12. Pressing, crimping or cutting tool (1; 2; 3) of claim 10 or 11, **characterised in that**
a) the force sensor (16) comprises an elastic sensor body (59),
b) the sensor body (59) forms a contact surface (61) with a sensor surface (60) of the force sensor (16),
c) the size of the contact surface (61) depends on the sensor force biasing the force sensor (16) and
d) the force sensor (16) or an associated electronic control unit determines the size of the contact surface (61) and converts the determined size of the contact surface (61) into a force measurement signal.

13. Pressing, crimping or cutting tool (1; 2; 3) of claim 12, **characterised in that** the sensor surface (60) of the force sensor (16) comprises a series (64) or matrix (76) of contacts or switches (65).

14. Pressing, crimping or cutting tool (1; 2; 3) of claim 12 or 13, **characterised in that** the size of the contact surface (61) is sensed
a) by the surface area of the contact surface (61) or
b) by an extension (63) of the contact surface (61) into at least one representative extension direction.

15. Pressing, crimping or cutting tool (1; 2; 3) of one of the preceding claims, **characterised in that** the pressing, crimping or cutting tool (1; 2; 3) comprises an electronic control unit for processing the or a measurement signal of the sensor (84).

16. Pressing, crimping or cutting tool (1; 2; 3) of claim 15, **characterised in that** the electronic control unit comprises control logic which determines a force measurement signal from an electric contact surface signal correlating with the or a size of the or a contact surface (61) under consideration of
a) a calibration factor, a calibration curve or a characteristic map,
b) a dependency of the size of the contact surface (61) from the sensor force biasing the force sensor (16),
c) a or the lever arm (15) of the or a sensor force,
d) a spring characteristic of the elastic supporting element (14) and/or
e) a or the lever arm (13) of the supporting force.

17. Pressing, crimping or cutting tool (1; 2; 3) of claim 15 or 16, **characterised in that** the electronic control unit comprises control logic which allows a calibration of the pressing, crimping or cutting tool (1; 2; 3) for working processes by providing the execution of the following steps:
a) initiation of the execution of a calibration working stroke or a plurality of calibration working strokes,
b) sensing of the measurement signal of the sensor (84) during at least one calibration working stroke,
c) determination of representative data, a calibration factor, a calibration curve or a characteristic map or of an offset from at least one measurement signal of the sensor (84) and/or representative fluctuations from a plurality of measurement signals of the sensor (84) sampled during a plurality of calibration working strokes,
d) use of the representative data, the calibration factor, the calibration curve, the characteristic map and/or the representative fluctuations for an evaluation of the quality of the working processes executed with the pressing, crimping or cutting tool (1; 2; 3) after a termination of the calibration process.

18. Tool group with at least one first pressing, crimping or cutting tool (1; 2; 3) and at least one second pressing, crimping or cutting tool (1; 2; 3), wherein the first pressing, crimping or cutting tool (1; 2; 3) and the second pressing, crimping or cutting tool (1; 2; 3)
a) are designed according to at least one of the preceding claims and
b) are pressing, crimping or cutting tools of different types and/or are designated for different maximum working forces,
**characterised in that** the first pressing, crimping or cutting tool (1; 2; 3) and the second pressing, crimping or cutting tool (1; 2; 3) comprise the same sensors (84) but different supporting elements (14).

## Revendications

1. Outil de pressage, de sertissage ou de coupe (1; 2; 3) avec des éléments (87, 88) disposés dans le flux de force de l'outil de pressage, de sertissage ou de coupe (1; 2; 3), dans lequel, entre les éléments (87, 88), sont disposés un élément d'appui élastique (14) et un capteur (84) dans un branchement mécanique en parallèle, de sorte que le capteur (84) et l'élément d'appui élastique (14) subissent, suite à une force de travail active, des déviations corrélées entre elles (85, 86), dans lequel les éléments (87, 88), entre lesquels sont disposés l'élément d'appui élastique (14) et le capteur (84), sont une mâchoire d'outil (5) et un corps d'appui (24),
**caractérisé en ce que** la rigidité de l'élément d'appui élastique (14) est telle que, lors d'une force de travail active maximale de l'outil de pressage, de sertissage ou de coupe (1; 2; 3), qui résulte d'une force d'entraînement pouvant être générée par un dispositif d'entraînement de l'outil de pressage, de sertissage ou de coupe (1; 2; 3) ou de la force manuelle maximale exercée par l'intermédiaire d'un levier, d'une valeur de 250 N et du rapport de démultiplication d'une cinématique d'entraînement utilisée dans l'outil de pressage, de sertissage ou de coupe (1; 2; 3), le capteur (84) subit une déviation maximale qui représente au moins 0,05 mm ou au moins 1°.

2. Outil de pressage, de sertissage ou de coupe (1; 2; 3) selon la revendication 1, **caractérisé en ce que** la mâchoire d'outil (5) est appuyée sur le corps d'appui (24) par l'intermédiaire d'un guidage (28) avec un degré de liberté de mesure résiduel (26), dans lequel
a) le guidage (28) est un guidage linéaire (78) et le degré de mesure résiduel (26) est un degré de liberté de mesure de translation (79) de la mâchoire d'outil (5) par rapport au corps d'appui (24) ou
b) le guidage (28) est un palier pivotant (6) et le degré de mesure résiduel (26) est un degré de liberté de mesure de pivotement (27) de la mâchoire d'outil (5) par rapport au corps d'appui (24).

3. Outil de pressage, de sertissage ou de coupe (1; 2; 3) selon la revendication 1 ou 2, **caractérisé en ce que** la mâchoire d'outil (5) s'appuie de manière lâche contre le capteur (16) et/ou l'élément d'appui (14).

4. Outil de pressage, de sertissage ou de coupe (1; 2; 3) selon l'une des revendications précédentes, **caractérisé en ce que** la mâchoire d'outil (5), le capteur (84) et/ou l'élément d'appui (14) sont sollicités par l'intermédiaire d'un ressort (43) en direction du degré de liberté de mesure (26).

5. Outil de pressage, de sertissage ou de coupe (1; 2; 3) selon l'une des revendications précédentes, **caractérisé en ce que** l'élément d'appui élastique (14)
a) comprend un corps en élastomère ou
b) comprend un corps de ressort métallique.

6. Outil de pressage, de sertissage ou de coupe (1; 2; 3) selon l'une des revendications précédentes, **caractérisé en ce que**
a) l'outil de pressage, de sertissage ou de coupe (1; 2; 3) comprend une autre mâchoire d'outil (34) et une tête d'outil (7) non mobile sur une course de travail, par rapport à laquelle les deux mâchoires d'outil (5, 34) sont guidées par l'intermédiaire du guidage (28) et
b) l'élément d'appui (14) et/ou le capteur (16) sont disposés dans le flux de force entre la tête d'outil (7) et la mâchoire d'outil (5) correspondante.

7. Outil de pressage, de sertissage ou de coupe (1; 2; 3) selon la revendication 6, **caractérisé en ce que** la tête d'outil (5) comprend au moins une plaque de recouvrement (8), qui supporte le guidage (28) et contre laquelle sont appuyés l'élément d'appui (14) et/ou le capteur (84).

8. Outil de pressage, de sertissage ou de coupe (1; 2; 3) selon la revendication 7, **caractérisé en ce que** l'au moins une plaque de recouvrement (8) comprend un évidement (80) dans lequel ou à travers lequel s'étendent l'élément d'appui (14) et/ou le capteur (84).

9. Outil de pressage, de sertissage ou de coupe (1; 2; 3) selon l'une des revendications précédentes, **caractérisé en ce que** le capteur (84) est un capteur de déplacement (77).

10. Outil de pressage, de sertissage ou de coupe (1; 2; 3) selon l'une des revendications 1 à 8, **caractérisé en ce que** le capteur (84) est un capteur de force (16).

11. Outil de pressage, de sertissage ou de coupe (1; 2; 3) selon la revendication 10, **caractérisé en ce qu'**un dispositif de limitation (81) est prévu, qui permet de limiter la force de capteur exercée sur le capteur de force (16).

12. Outil de pressage, de sertissage ou de coupe (1; 2; 3) selon la revendication 10 ou 11, **caractérisé en ce que**
a) le capteur de force (16) comprend un corps de capteur élastique (59),
b) le corps de capteur (59) forme une surface de contact (61) avec une surface de capteur (60) du capteur de force (16),
c) la taille de la surface de contact (61) dépend de la force de capteur exercée sur le capteur de force (16) et
d) le capteur de force (16) ou une unité de commande électronique correspondante détermine la taille de la surface de contact (61) et convertit la taille déterminée de la surface de contact (61) en un signal de mesure de force.

13. Outil de pressage, de sertissage ou de coupe (1; 2; 3) selon la revendication 12, **caractérisé en ce que** la surface de capteur (60) du capteur de force (16) est conçue comme une série (64) ou une matrice (76) avec des contacts ou des commutateurs (65).

14. Outil de pressage, de sertissage ou de coupe (1; 2; 3) selon la revendication 12 ou 13, **caractérisé en ce que** la taille de la surface de contact (61)
a) est mesurée grâce à la superficie de la surface de contact (61) ou
b) est mesurée grâce à l'extension (63) de la surface de contact (61) dans au moins une direction d'extension représentative.

15. Outil de pressage, de sertissage ou de coupe (1; 2; 3) selon l'une des revendications précédentes, **caractérisé en ce que** l'outil de pressage, de sertissage ou de coupe (1; 2; 3) comprend une unité de commande électronique pour l'analyse du ou d'un signal de mesure du capteur (84).

16. Outil de pressage, de sertissage ou de coupe (1; 2; 3) selon la revendication 15, **caractérisé en ce que** l'unité de commande électronique est munie d'une logique de commande qui détermine un signal de mesure de force à partir d'un signal de surface de contact électrique corrélé avec la ou une taille de la ou d'une surface de contact (61), en tenant compte
a) d'un facteur de calibrage, d'une courbe de calibrage ou d'un diagramme caractéristique,
b) d'une dépendance entre la taille de la surface de contact (61) et la force de capteur exercée sur le capteur de force (16),
c) d'un ou du bras de levier (15) de la ou d'une force de capteur,
d) d'une caractéristique élastique de l'élément d'appui élastique (14) et/ou
e) d'un ou du bras de levier (13) de la force d'appui.

17. Outil de pressage, de sertissage ou de coupe (1; 2; 3) selon la revendication 15 ou 16, **caractérisé en ce que** l'unité de commande électronique est munie d'une logique de commande qui permet un calibrage de l'outil de pressage, de sertissage ou de coupe (1; 2; 3) pour des processus d'usinage, cette unité de commande étant conçue pour l'exécution des étapes suivantes:
a) initialisation d'une exécution d'une course de travail de calibrage ou de plusieurs courses de travail de calibrage,
b) détection du signal de mesure du capteur (84) pendant au moins une course de travail de calibrage,
c) détermination de données représentatives, d'un facteur de calibrage, d'une courbe de calibrage ou d'un diagramme caractéristique ou d'un offset à partir d'au moins un signal de mesure du capteur (84) et/ou de données représentatives à partir de plusieurs signaux de mesure du capteur (84) enregistrées pendant plusieurs courses de travail de calibrage,
d) utilisation des données représentatives, du facteur de calibrage, de la courbe de calibrage, du diagramme caractéristique et/ou des variations représentatives pour une évaluation de la qualité des processus d'usinage avec l'outil de pressage, de sertissage ou de coupe (1; 2; 3) après la fin du calibrage.

18. Groupe d'outils avec au moins un premier outil de pressage, de sertissage ou de coupe (1; 2; 3) et au moins un deuxième outil de pressage, de sertissage ou de coupe (1; 2; 3), dans lequel le premier outil de pressage, de sertissage ou de coupe (1; 2; 3) et le deuxième outil de pressage, de sertissage ou de coupe (1; 2; 3)
a) sont conçus selon au moins l'une des revendications précédentes et
b) les outils de pressage, de sertissage ou de coupe sont de types différents et/ou sont conçus pour des forces de travail maximales différentes,
**caractérisé en ce que** le premier outil de pressage, de sertissage ou de coupe (1; 2; 3) et le deuxième outil de pressage, de sertissage ou de coupe (1; 2; 3) comprennent les mêmes capteurs (84), mais des éléments d'appui (14) différents.
